(19) Europäisches Patentamt
European Patent Office
Office européen des brevets

(11) EP 4 215 589 A1

(12) EUROPEAN PATENT APPLICATION

(43) Date of publication:
**26.07.2023 Bulletin 2023/30**

(21) Application number: **22152246.9**

(22) Date of filing: **19.01.2022**

(51) International Patent Classification (IPC):
***C09D 4/00** (2006.01)* ***C09D 11/101** (2014.01)*
***C08L 93/04** (2006.01)* ***C09D 193/04** (2006.01)*

(52) Cooperative Patent Classification (CPC):
**C09D 193/04; C08L 93/04; C09D 4/00; C09D 7/65; C09D 11/10; C09D 11/101**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hubergroup Deutschland GmbH**
**85551 Kirchheim-Heimstetten (DE)**

(72) Inventors:
- **BACK, Justus**
  **81829 München (DE)**
- **TAMBOLI, Hemant**
  **Gujarat 391410 (IN)**

(74) Representative: **Henkel & Partner mbB**
**Patentanwaltskanzlei, Rechtsanwaltskanzlei**
**Maximiliansplatz 21**
**80333 München (DE)**

# (54) A ROSIN POLYMER TO BE USED AS INERT COMPONENT IN A COATING, IN PARTICULAR A RADIATION CURING COATING SUCH AS A RADIATION CURING PRINTING INK

(57) A polymer is obtainable by a method comprising the reaction of:
a) at least one rosin acid containing at least two conjugated carbon-carbon double bonds,
b) at least one polydienophile compound comprising two or more carbon-carbon double bonds,
c) at least one compound selected from the group consisting of polyhydroxyl compounds $c_1$), polyepoxy compounds $c_2$), polyamine compounds $c_3$), polythiol compounds $c_4$) and arbitrary combinations of two or more of the aforementioned compounds and
d) at least one photoinitiator $d_1$) and/or at least one co-initiator $d_2$), wherein the at least one photoinitiator $d_1$) and/or the at least one co-initiator $d_2$) comprises at least one functional group being selected from the group of ester groups, carboxylic acid groups, carboxylic acid chloride groups, carboxylic acid anhydride groups, hydroxyl groups, thiol groups, primary amine groups, halogen groups, epoxy groups, isocyanate groups, isothiocyanate groups and arbitrary combinations of two or more of the aforementioned groups.

EP 4 215 589 A1

## Description

The present invention relates to a polymer being suitable as inert component in a coating, in particular a radiation curing coating, such as a radiation curing printing ink.

Coatings, i.e. coverings being applied to the surface of an object, are widely used for different purposes, such as for protecting the surface for instance against corrosion, wear and/or humidity, for decorating the surface, for functionalizing the surface for instance by providing electrical conductivity and/or a magnetic response, for providing information such as in the case of newspapers (i.e. printed paper) or printed cardboards or the like. Examples for such coatings are industrial coatings, such as varnishes on metal surfaces and on plastic substrates, such as inner and/or outer pipe coatings, coil coating and UV curing varnishes for corrosion protection of metal parts in automotive and ACE (agriculture, construction and earth moving) applications. Other examples are wall coatings, floor coatings, inks and the like. Such coatings may be applied onto the substrate as liquid, gas or solid and are then typically dried, hardened or cured, respectively, either by physical drying upon water or solvent evaporation, or by a reaction, such as cross-linking or the like. Depending on the curing mechanism, these coatings are subdivided into temperature curing coatings, moisture curing coatings, oxidatively curing coatings, radiation curing coatings including UV curing coatings and the like. A particular important class of such coatings are radiation curing coatings, which cure upon exposure to radiation.

However, the known and in particular radiation curing coatings, such as radiation curing varnishes for metal surfaces are not satisfying in particular with regards to a good adhesion on metal surfaces or plastic substrates. Especially plastic surfaces, having a low energy surface, such as polyethylene terephthalate (PET), polyvinyl chloride (PVC), polyethylene (PE), polypropylene (PP) or biaxially oriented polypropylene (BOPP) films, are critical in terms of the adhesion. For instance, it is important to minimize the shrinkage and particularly the lateral shrinkage of the coated layer during the curing process to obtain a proper adhesion. The shrinkage occurs during the curing of a coating composition, since the dimensions of the coating composition before and after the curing alter as a consequence of the crosslinking reaction, which can be for instance a radical polymerization of ethylenic groups. In most cases the substrate does not shrink which leads to internal stress in the coating. On a flexible substrate such as plastic films this internal stress leads to a coiling of the coated films. This coil effect can be analyzed empoying the cross-cut method described in the DIN norm 55403. The formation of a covalent bond between the ethylenic groups leads to the volume shrinkage of the coated layer. The crosslinking density is proportional to the observed shrinkage of the material. One approach for reducing the shrinkage of a coated layer, such as a printing ink layer, during the curing process is to include one or more inert resins into the coating, such as a printing ink composition. An inert resin in this connection means a resin, which does not have any ethylenic or polymerizable double bonds that can take part in a radical polymerization reaction initiated for example by a photoinitiator. On account of this reason, upon exposure to radiation, such as UV radiation, the inert resin does not participate in the curing reaction of the components containing ethylenic groups of the coating composition and blocks to a certain extent the formation of a very high crosslinking network of the ethylenic groups. Thus, the crosslinking density is reduced but at the same time fully cured coating layer reveals a completely tack free surface. An additional advantageous effect of such inert resins is that most of the inert resins improve the mechanical properties of the cured coating composition and thus of the coated substrates. For instance, such an inert resin may increase the flexibility and/or lower the brittleness of the coating composition. Flexibility and elasticity also have a positive impact on the adhesion properties of the coated layer.

Typically, cellulose acetate butyrate (CAB), cellulose acetate propionate, ketonic resins, acrylic resins, polyamides, polyurethanes, (chlorinated) polyesters, poly diallylphthalate resins (DAP) and copolymers are used as inert resin in a coating composition. All of them have more or less disadvantages. For example, chlorine containing resins, such as chlorinated polyesters, are very difficult to recycle, because they decompose thermally and produce hydrogen chloride that is released to the environment. Especially CAB and DAP resins are very often used as inert resin in radiation curing compositions due to their additional advantageous effects on the formulation properties as well as the cured coating. For example, if used in offset printing inks, DAP resins have a positive effect on the printing performance and especially the stability of the ink/water balance during the offset printing process at higher printing speeds. CAB on the other hand is very often added to the formulation as adhesion promoter to improve the adhesion on plastic and metal surfaces. A further advantage of CAB is that it is derived from a natural polymer, namely from cellulose. More specifically, cellulose acetate butyrate is a mixed ester thermoplastic derivative of cellulose acetate that contains both acetate and butyrate functional groups being grafted onto a cellulose backbone. The exact properties of CAB are determined by the molecular weight and amount of acetate and butyrate groups grafted to the cellulose backbone. However, CAB is likewise to DAP very expensive. Moreover, CAB is sensitive to hydrolyzation and release thereby butyric acid. However, butyric acid has a very bad odor already at small concentrations, which highly limits the use of CAB resins for a plurality of applications, such as for instance as ingredient of printing inks or printing varnishes for food contacting materials, such as primary food packages.

Another drawback of such radiation curing coatings, such as UV curing coatings, is that they require the addition of photoinitiator compounds, which initiate the curing reaction after being subjected to radiation, such as UV radiation.

However, photoinitiator compounds as low molecular weight components may migrate in the cured coating, out of the cured coating and/or through the substrate, which is at least for certain applications, such as the printing of a package for food, not acceptable.

In view of this, the object underlying the present invention is to provide a polymer being particularly suitable as inert resin in a coating composition and particularly in a radiation curing coating composition, such as in particular in a radiation curing printing ink composition for instance for printing on non-absorbing substrates, such as metal or plastic substrates. If contained in a coating composition the polymer contributes to a good adhesion on metal surfaces as well as plastic substrates having a low surface energy. Examples of such low energy surfaces are polyethylene terephthalate (PET), polyvinyl chloride (PVC), polyethylene (PE), polypropylene (PP) or biaxially oriented polypropylene BOPP films or metallized surfaces. Furthermore, the polymer shall reduce the shrinkage and in particular the lateral shrinkage of a printed and cured layer composition upon exposure to radiation, wherein this polymer shall not be part of the propagation reaction of the radical polymerization reaction upon exposure to radiation. In addition, it shall be synthesized to a high percentage of natural raw materials. Moreover, the polymer shall have very little odor or be even odorless, and shall not require the addition of a monomeric photoinitiator compound or, if at all, shall at most require the addition of very low amounts of a monomeric photoinitiator compound.

In accordance with the present invention this object is satisfied by providing a polymer being obtainable by a method comprising the reaction of:

a) at least one rosin acid containing at least two conjugated carbon-carbon double bonds,
b) at least one polydienophile compound comprising two or more carbon-carbon double bonds,
c) at least one compound selected from the group consisting of polyhydroxyl compounds $c_1$), polyepoxy compounds $c_2$), polyamine compounds $c_3$), polythiol compounds $c_4$) and arbitrary combinations of two or more of the aforementioned compounds and
d) at least one photoinitiator $d_1$) and/or at least one co-initiator $d_2$), wherein the at least one photoinitiator $d_1$) and/or the at least one co-initiator $d_2$) comprises at least one functional group being selected from the group of ester groups, carboxylic acid groups, carboxylic acid chloride groups, carboxylic acid anhydride groups, hydroxyl groups, thiol groups, primary amine groups, halogen groups, epoxy groups, isocyanate groups, isothiocyanate groups and arbitrary combinations of two or more of the aforementioned groups.

This solution bases on the surprising finding that the above described polymer is able, if contained in a coating composition, such as in particular in a radiation curing coating composition, to reduce the shrinkage and in particular the lateral shrinkage of a coated and cured layer composition during the cross-linking, which starts for instance upon exposure to radiation, such as UV radiation, and furthermore leads to a good adhesion on non-absorbent substrates such as metal surfaces as well as plastic substrates having a low energy surface, such as polyethylene terephthalate (PET), polyvinyl chloride (PVC), oriented polyamide (OPA), polyethylene (PE), polypropylene (PP) or biaxially oriented polypropylene BOPP films or metallized surfaces. On account of these reasons, the polymer in accordance with the present invention is particularly suitable as inert resin for a coating composition and in particular for a radiation curing coating composition, for example for coating metal parts in coil coating applications, automotive applications and ACE (agricultural, construction and earth moving) applications. A further important advantage of the polymer in accordance with the present invention is that it is based at least mainly on natural raw materials by using rosin acid(s) as one of the main reactants. Furthermore, the polymer in accordance with the present invention comprises photoinitiator groups and thus, the coating composition including the polymer does not require the addition of low molecular weight photoinitiator compounds or, if at all, only the addition of low amounts of low molecular weight photoinitiator compounds. Thus, due to their low migration potential, such coatings are also suitable to cover sensitive goods, such as a coating being in direct or indirect contact with food. In addition, the polymer has little odor or is odor neutral.

A polymer means in accordance with the present invention a substance being composed of molecules being a sequence of one or more types of monomer units. Such molecules are characterized by a molecular weight distribution, wherein differences in the molecular weight are primarily attributable to differences in the number of monomer units in the molecules. Furthermore, a monomer unit is defined in accordance with the present invention as a substance which may be converted via a polymerization reaction into a repeating unit of the polymer sequence. In accordance with the REACH (Registration, Evaluation, Authorisation and Restriction of Chemicals) definition (Regulation (EC) No 1907/2006) of the European Chemical Agency (Echa), a polymer is preferably defined as a substance meeting the following criteria:

a) More than 50% of the weight of the substance consists of polymer molecules with a minimum of three monomer units which are covalently bound to at least one other monomer unit or other reactants.
b) The amount of polymer molecules presenting the same molecular weight is less than 50% by weight of the substance.

In accordance with a particular preferred embodiment of the present invention, the method comprises the reaction of components a), b), c) and d) further with at least one carboxylic acid or carboxylic acid derivative e) comprising one or more carboxylic acid groups, carboxylic acid chloride groups or carboxylic acid anhydride groups.

In accordance with the present invention, the polymer is obtainable by a method comprising the reaction of compounds a) and b) and c) and d) and optionally e). These compounds may be reacted in one step or in two or more steps, which may be performed in any order.

For instance, the compounds a) to d) and optionally e) are mixed and reacted in one step at a suitable temperature.

Alternatively, firstly compounds a) and b) are reacted so as to produce a first reaction product, before the so obtained reaction product is reacted in a second step with the compounds c), d) and optionally e).

Alternatively, the compounds a) and b) are reacted so as to produce a first reaction product, before the so obtained first reaction product is reacted in a second step with the compounds c) and e) to produce the second reaction product, before the so obtained second reaction product is reacted with compound d) to produce the polymer. This embodiment is particularly preferred, if the compound d) is at least one photoinitiator $d_1$) and/or at least one co-initiator $d_2$), wherein the at least one photoinitiator $d_1$) and/or the at least one co-initiator $d_2$) comprises at least one isocyanate group and/or at least one isothiocyanate group and/or at least one epoxy group as functional group.

According to still an alternative embodiment, the compounds a) and d) are reacted so as to produce a first reaction product, before the so obtained first reaction product is reacted in a second step with the compound b) so as to produce a second reaction product, before the so obtained second reaction product is reacted with compounds c) and e) to produce the polymer. This embodiment is particularly preferred, if the compound d) is at least one photoinitiator $d_1$) and/or at least one co-initiator $d_2$), wherein the at least one photoinitiator $d_1$) and/or the at least one co-initiator $d_2$) comprises at least one hydroxyl group and/or at least one thiol group and/or at least one amine group as functional group.

According to still an alternative embodiment, the compounds a) and c) are reacted so as to produce a first reaction product, before the so obtained first reaction product is reacted in a second step with the compound b) so as to produce a second reaction product, before the so obtained second reaction product is reacted with compounds e) and d) to produce the polymer. This embodiment is particularly preferred, if the compound d) is at least one photoinitiator $d_1$) and/or at least one co-initiator $d_2$), wherein the at least one photoinitiator $d_1$) and/or the at least one co-initiator $d_2$) comprises at least one epoxy group and/or at least one amine group as functional group.

In accordance with yet an alternative embodiment, the compounds c) and d) are reacted so as to produce a first reaction product and separately therefrom compounds a) and b) are reacted so as to produce a second reaction product, before the so obtained first reaction product is reacted with the second reaction product and compound e).

Preferably, the polymer does not contain any terminal vinyl group, does not contain any terminal acrylic group and does not contain any terminal methacrylic group. Preferably, the polymer in accordance with the present invention does not contain any terminal carbon-carbon double bond.

The present invention is not particularly limited concerning the kind of the at least one rosin acid containing at least two conjugated carbon-carbon double bonds a). Good results are in particular obtained, when at least one rosin acid a) is used, in which the at least two conjugated carbon-carbon double bonds of the at least one rosin acid a) are not part of an aromatic ring system.

The at least one rosin acid a) may comprise two or more conjugated carbon-carbon double bonds, but it is preferred that the at least one rosin acid a) comprises exactly two conjugated carbon-carbon double bonds.

Good results are in particular obtained, when the at least one rosin acid a) comprises three fused $C_6$-hydrocarbon rings and preferably three fused non-aromatic $C_6$-hydrocarbon rings.

In a particular preferred embodiment of the present invention, the at least one rosin acid a) is a rosin acid, which is selected from the group consisting of pimaric acid, neoabietic acid, palustric acid, abietic acid, levopimaric acid and arbitrary combinations of two or more of the aforementioned carboxylic acids. Most preferably, the at least one rosin acid a) is levopimaric acid, because levopimaric acid has the highest reactivity towards the polydienophile compound b). The other aforementioned rosin acids may at least partially undergo a rearrangement reaction at temperatures of about 230°C to levopimaric acid.

In a further development of the idea of the present invention it is suggested that the at least one rosin acid a) is added in form of rosin and/or dimerized rosin and/or disproportionated rosin. Dimerized rosin may be prepared by subjecting rosin to elevated temperatures, such as of at least 260°C, optionally in the presence of an appropriate catalyst. The rosin and/or dimerized rosin and/or disproportionated rosin preferably contains 40 to 90% by weight of one or more rosin acids containing at least two conjugated carbon-carbon double bonds. A particular advantage of using rosin as source for the at least one rosin acid a) is that rosin is a natural product. Suitable rosin types are those selected from the group consisting of Himachal rosin, Chinese gum rosin, Brazilian rosin, Brazilian gum rosin, pinus hibbrido, pinus elliotto, Indonesian rosin, Vietnam rosin, Mexican rosin, tall oil rosin, tropical rosin and arbitrary combinations of two or more of the aforementioned rosins.

The at least one polydienophile compound b) comprising two or more carbon-carbon double bonds may be

any compound, which comprises two or more carbon-carbon double bonds. In other words, the prefix poly means that the dienophile compound b) comprises two or more carbon-carbon double bonds. For example, the at least one polydienophile compound b) comprising two or more carbon-carbon double bonds is a compound according to the following general formula (1):

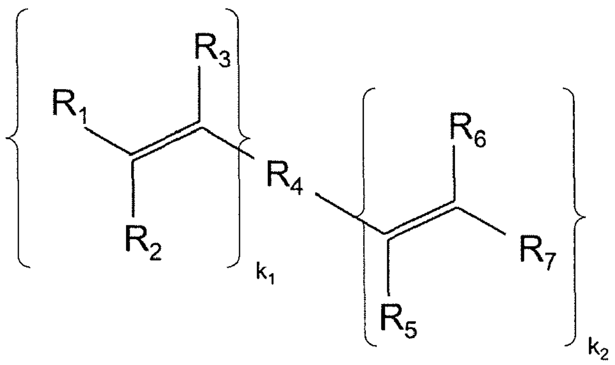

(1)

wherein

$R_1$ to $R_3$ and $R_5$ to $R_7$ are independently from each other selected from the group consisting of hydrogen, alkyl groups, substituted alkyl groups, aromatic groups, substituted aromatic groups, heterocyclic groups, substituted heterocyclic groups, cycloaliphatic groups and substituted cycloaliphatic groups, wherein the substituted group may be substituted with one or more ether groups, one or more ester groups, one or more carboxylic groups, epoxy groups, one or more amide groups, or the like, with $R_1$ or $R_2$ being optionally a bond with $R_3$ and/or $R_6$ or with $R_7$ being optionally a bond with Rs,

$R_4$ is an alkyl group or a substituted alkyl group, wherein the substituted alkyl group may be substituted with one or more ether groups, one or more thioether groups, one or more ester groups, one or more carboxylic groups, one or more hydroxyl groups, one or more epoxy groups, one or more amide groups or the like. one or more urethane groups, one or more thiol groups, one or more acid chloride groups, one or more keto or aldehyde groups, and

$k_1$ and $k_2$ are independently from each other an integer of 0 to 20.

Preferably, in general formula (1) groups $R_1$ to and $R_5$ to $R_7$ are independently from each other selected from the group consisting of hydrogen, alkyl groups, substituted alkyl groups, aromatic groups and substituted aromatic groups. More preferably, groups $R_1$ to and $R_5$ to $R_7$ are independently from each other selected from the group consisting of hydrogen, linear alkyl groups, branched alkyl groups, substituted linear alkyl groups and substituted branched alkyl groups. Even more preferably, groups $R_1$ to and $R_5$ to $R_7$ are independently from each other selected from the group consisting of hydrogen, linear $C_{1-10}$-alkyl groups, branched $C_{1-10}$-alkyl groups, substituted linear $C_{1-10}$-alkyl groups, substituted branched $C_{1-10}$-alkyl groups and linear or branched $C_{1-10}$ ester groups. Still more preferably, groups $R_1$ to and $R_5$ to $R_7$ are independently from each other selected from the group consisting of hydrogen, linear $C_{1-4}$-alkyl groups, branched $C_{1-4}$-alkyl groups, substituted linear $C_{1-4}$-alkyl groups, substituted branched $C_{1-4}$-alkyl groups and linear or branched $C_{1-4}$ ester groups. Group $R_4$ in general formula (1) is preferably a linear or branched polyalkoxylated polyester, a substituted linear or branched polyalkoxylated polyester, a linear $C_{1-10}$-alkyl group, a branched $C_{1-10}$-alkyl group, a substituted linear $C_{1-10}$-alkyl group or a substituted branched $C_{1-10}$-alkyl group and more preferably a linear $C_{1-4}$-alkyl group, a branched $C_{1-4}$-alkyl group, a substituted linear $C_{1-4}$-alkyl group or a substituted branched $C_{1-4}$-alkyl group. More preferably, group $R_4$ in general formula (1) is a linear or branched polyethoxylated and/or polypropoxylated polyester or a substituted linear or branched polyethoxylated and/or polypropoxylated polyester.

Even more preferably, the at least one polydienophile compound b) comprising two or more carbon-carbon double bonds is an $\alpha,\beta$-unsaturated compound according to the general formula (1), in which at least two of $R_1$ to and at least two of $R_5$ to $R_7$ are hydrogen.

In accordance with a particular preferred embodiment of the present invention, the at least one polydienophile compound b) comprising two or more carbon-carbon double bonds is selected from the group of diacrylate compounds, triacrylate compounds, tetraacrylate compounds, penta- or higher functional acrylate compounds, dimethacrylate compounds, trimethcrylate compounds, tetramethacrylate compounds, penta- or higher functional methacrylate compounds and arbitrary combinations of two or more of the aforementioned compounds. The (meth)acrylate compounds may fall under the general formula (1) or not, i.e. this embodiment even comprises all di- or higher functional (meth)acrylate compounds, which do not fall under the general formula (1). Preferred are aforementioned compounds having a weight

average molecular weight (in the following denoted as Mw) determined by gel permeation chromatography of at most 10,000 g/mol and more preferably of between 200 and 5,000 g/mol.

Suitable di- or higher functional (meth)acrylate compounds are those being selected from the group consisting of 1,6-hexanediol diacrylate (HDDA), ethoxylated/propoxylated 1,6-hexanediol diacrylates, dipropyleneglycol diacrylate (DPGDA), tripropyleneglycol diacrylate (TPGDA), polypropylene diacrylates, polybutadiene diacrylates, 3-methyl-1,5-pentanediol diacrylate, polyethyleneglycol diacrylates (PEGDA), polytetrahydrofuran diacrylates, ethoxylated bisphenol A diacrylates, 1,10-decandiol diacrylate, ethoxylated bisphenol F diacrylates, tricyclodecane dimethanol diacrylate, 2-neopentylglycol diacrylate, ethoxylated/propoxylated 2 neopentylglycol diacrylates, ethoxylated/propoxylated trimethylolpropane diacrylates, ethoxylated/propoxylated trimethylolpropane diacrylates, isosorbide diacrylate, ethoxylated/propoxylated isosorbide diacrylates, polycaprolactonediol diacrylates, glycerin diacrylate, ethoxylated/propoxylated glycerin diacrylates, glycerin triacrylate, ethoxylated/propoxylated glycerin triacrylates, trimethylolpropane triacrylate, ethoxylated/propoxylated trimethylolpropane triacrylates, tris(2-hydroxyethyl)isocyanurate triacrylate (THEICTA), pentaerythritol triacrylate, ethoxylated/propoxylated pentaerythritol triacrylates, pentaerythritol tetraacrylate, ethoxylated/propoxylated pentaerythritol tetraacrylates, ditrimethylolpropane triacrylate, ditrimethylolpropane tetraacrylate, dipentaerythritol pentaacrylate, dipentaerythritol hexaacrylate, epoxidized soy bean oil acrylates, epoxidized linseed oil acrylates, low molecular weight polyesteracrylates, epoxy novolac acrylates, phenol epoxy novolac acrylates, polyesteracrylates, 1,6-hexanediol dimethacrylate, ethoxylated/propoxylated 1,6-hexanediol dimethacrylates, dipropyleneglycol dimethacrylate, tripropyleneglycol dimethacrylate, polypropylene dimethacrylates, polybutadiene dimethacrylates, 3-methyl 1,5-pentanediol dimethacrylate, polyethyleneglycol dimethacrylates, polytetrahydrofuran dimethacrylates, ethoxylated bisphenol A dimethacrylates, 1,10-decandiol dimethacrylate, ethoxylated 4-bishenol A dimethacrylates, ethoxylated bisphenol F dimethacrylates, tricyclodecanedimethanol dimethacrylate, 2-neopentylglycol dimethacrylate, ethoxylated/propoxylated 2-neopentylglycol dimethacrylates, trimethylolpropane dimethacrylate, ethoxylated/propoxylated trimethylolpropane dimethacrylates, isosorbide dimethacrylate, ethoxylated/propoxylated isosorbide dimethacrylates, glycerin trimethacrylates, ethoxylated/propoxylated glycerin trimethacrylates, glycerin dimethacrylate, ethoxylated/propoxylated glycerin dimethacrylates, trimethylolpropane trimethacrylate, ethoxylated/propoxylated trimethylolpropane trimethacrylates, tris(2-hydroxyethyl)isocyanurate trimethacrylate, pentaerythritol trimethacrylate, ethoxylated/propoxylated pentaerythritol trimethacrylates, pentaerythritol tetramethacrylate, ethoxylated/propoxylated pentaerythritol tetramethacrylates, ditrimethylolpropane trimethacrylate, ditrimethylolpropane tetramethacrylate, dipentaerythritol pentamethacrylate, dipentaerythritol hexamethacrylate, low molecular weight polyester methacrylates, epoxy novolac methacrylate, phenol epoxy novolac methacrylate and arbitrary combinations of two or more of the aforementioned compounds. Preferred are aforementioned compounds having a weight average molecular weight $M_w$ determined by gel permeation chromatography of at most 10,000 g/mol and more preferably of between 200 and 5,000 g/mol.

In accordance with an alternative particularly preferred embodiment of the present invention, the at least one polydienophile compound b) comprising two or more carbon-carbon double bonds is a divinyl ether compound, a trivinyl ether compound, a tetravinyl ether compound or even higher functional polyvinyl ether compound. The vinyl ether compound may fall under the general formula (1) or not, i.e. this embodiment even comprises all di- or higher functional vinyl ether compounds, which do not fall under the general formula (1).

Suitable di- or higher functional vinyl ether compounds are those being selected from the group consisting 1,6-hexanediol divinylether, ethoxylated/propoxylated 1,6-hexanediol divinylethers, dipropyleneglycol divinylether, tripropyleneglycol divinylether, polypropylene divinylethers, polybutadiene divinylethers, 3-methyl 1,5-pentanediol divinylether, polyethylene glycol divinylethers, polytetrahydrofuran divinylethers, ethoxylated bisphenol A divinylethers, 1,10-decandiol divinylether, ethoxylated bishenol A divinylethers, ethoxylated bisphenol F divinylethers, tricyclodecanedimethanol divinylether, 2 neopentyl glycol divinylether, ethoxylated/propoxylated 2 neopentyl glycol divinylethers, trimethylolpropane divinylether, ethoxylated/propoxylated trimethylolpropane divinylethers, isosorbide divinylether, ethoxylated/propoxylated isosorbide divinylethers, glycerin trivinylether, ethoxylated/propoxylated glycerin trivinylethers, glycerin divinylether, ethoxylated/propoxylated glycerin divinylethers, trimethylolpropane trivinylether, ethoxylated/propoxylated trimethylolpropane trivinylethers, pentaerythritol trivinylether, ethoxylated/propoxylated pentaerythritol trivinylethers, pentaerythritol tetravinylether, ethoxylated/propoxylated pentaerythritol tetravinylethers, ditrimethylolpropane trivinylether, ditrimethylolpropane tetravinylether, dipentaerythritol pentavinylether, dipentaerythritol hexavinylether, low molecular weight polyestervinylethers, and arbitrary combinations of two or more of the aforementioned compounds.

In accordance with an alternative particular preferred embodiment of the present invention, the at least one polydienophile compound b) comprising one or more carbon-carbon double bonds is a an itaconic compound comprising two or more carbon-carbon double bonds.

In accordance with the present invention, also the at least one compound selected from the group consisting of polyhydroxyl compounds $c_1$), polyepoxy compounds $c_2$), polyamine compounds $c_3$), polythiol compounds $c_4$) and arbitrary combinations of two or more of the aforementioned compounds is contained as reacted compound in the polymer of the present invention.

Preferably, the at least one polyhydroxyl compound $c_1$) comprises at least two hydroxyl groups, more preferably

at least three hydroxyl groups and even more preferably at least four hydroxyl groups. Primary hydroxyl groups are particularly preferred so that the at least one polyhydroxyl compound $c_1$) comprises even more preferably at least two primary hydroxyl groups, still more preferably at least three primary hydroxyl groups and yet more preferably at least four primary hydroxyl groups. The at least one polyhydroxyl compound $c_1$) may be branched, linear or cyclic and may or may not contain heteroatoms, such as nitrogen, oxygen or sulfur atoms.

Suitable examples for the at least one polyhydroxyl compound $c_1$) are monomeric polyols with two or more hydroxyl groups, linear polyetherpolyols with two or more hydroxyl groups, branched polyetherpolyols with two or more hydroxyl groups, sugar alcohols with three or more hydroxyl groups and triglycerides with three secondary hydroxyl groups.

More specifically, the at least one polyhydroxyl compound $c_1$) may be selected from the group consisting of 1,2,4-butanetriol, 1,2,6-hexanetriol, 3-methyl-pentane-1,3,5-triol, diglycerin, dipentaerythritol, di-trimethylol propane, erythritol, fucitol, galactitol, glycerin, hydroxymethyl hexanediol, iditol, inositol, lactitol, maltitol, maltotetraitol, maltotriitol, mannitol, pentaerythritol, polyglycitol, ribitol, threitol, arabitol, trimethylol butane, trimethylol ethane, trimethylol hexane, trimethylol octane, trimethylol propane, tripentaerythritol, volemitol, tris (2-hydroxyethyl)isocyanurate, neopentyl glycol, ethylene glycol, diethylene glycol, propylene glycol, methylpropanediol, polyether polyols, ethoxylated or propoxylated branched polyols, sorbitol, xylitol, isosorbide and arbitrary combinations of two or more of the aforementioned polyhydroxyl compounds.

Particularly preferred at least one polyhydroxyl compound $c_1$) are branched polyols and monomeric polyols and most preferred is pentaerythritol.

Moreover, it is preferred that the optional at least one polyepoxy compound $c_2$) comprises at least two epoxy groups and preferably at least three epoxy groups.

Good results are in particular obtained, when the at least one polyepoxy compound $c_2$) is selected from the group consisting of polyglycidylethers, bisphenol A diglycidylethers, bisphenol F diglycidylethers, ethoxylated/propoxylated bisphenol A diglycidylethers, ethoxylated/propoxylated bisphenol F diglycidylethers, 3,4-epoxycyclohexylmethyl-3',4'-epoxy-cyclohexane carboxylates, epoxyphenol novolacs, 1,4-butanediol diglycidylethers, neopentylglycol diglycidylethers, 1,6-hexandiol diglycidylethers, polyoxypropylenglycol diglycidylethers, trimethylolpropane triglycidylethers, poly(tetramethylene oxide) diglycidylethers, polyglycerol-3-polyglycidylethers, glycerin triglycidylethers, pentaerythrol polyglycidylethers, polyglycidylether of ethoxylated trimethylolpropanes, polyglycidylether of propoxylated glycerin, hydrated bisphenol A-diglycidylethers, hydrated bisphenol F-diglycidylethers, triglycidyl isocyanurates, novolac resins and arbitrary combinations of two or more of the aforementioned polyepoxy compounds.

If contained in the polymer, the optional at least one polyamine compound $c_3$) preferably comprises at least two amino groups and preferably at least three amino groups. More preferably, at least one of the amino groups of the polyamine compound $c_3$) are primary amino groups and most preferably all amino groups of the polyamine compound $c_3$) are primary amino groups.

Suitable examples for polyamine compounds $c_3$) are polyamines, alkoxylated polyamines, polyetheramines, polyesteramines, polyamidoamines, amino-functional polyurea compounds, and arbitrary combinations of two or more of the aforementioned compounds. The aforementioned compounds preferably have a weight average molecular weight $M_w$ determined by gel permeation chromatography of at most 5,000 g/mol and more preferably of between 200 and 5,000 g/mol. More specifically, suitable examples are polypropyleneglycol diamines, polyethyleneglycol diamines, alkoxylated glycerol triamines, diethylene triamines, tetraethylene diamines, polytetramethyleneglycol diamines, primary amines based on polyoxyalkyl polyamine with a weight average molecular weight $M_w$ preferably of 200 to 5,000 g/mol, N,N,N,N'-tetraglycidyldiamino-4,4'-diphenylmethane, isophorone diamine, cyanoethylated trimethyl-hexamethylenediamine, diaminodiphenylmethane and arbitrary combinations of two or more of the aforementioned compounds.

If contained in the polymer, the optional at least one polythiol compound $c_4$) preferably comprises at least two thiol groups and preferably at least three thiol groups.

Suitable examples for polythiol compounds $c_4$) are polythiol, an aliphatic polythiol, an aromatic polythiol, an ester polythiol, mercaptan terminated polymers supplied by Huntsman, e.g. CAPCURE 3800, CAPCURE 3830, GABEPRO GPM-800, GABEPRO GPM-800 LO, GABEPRO GPM-830 CB, Ebecryl 375, Brenntag Specialties PM 800. Preferred specific examples of polythiols are dimercaptodiethyl sulfide, 1,6-hexanedithiol, 1,8-dimercapto-3,6-dithiaoctane, propane-1,2,3-trithiol, 1,2-bis[(2-mercaptoethyl)thio]-3-mercaptopropane, tetrakis(7-mercapto-2,5-dithiaheptyl)methane and trithiocyanuric acid. Another useful class of polythiols includes those obtained by esterification of a polyol with a terminally thiol-substituted carboxylic acid (or derivative thereof such as esters or acyl halides) including $\alpha$- or $\beta$-mercaptocarboxylic acids, such as thioglycolic acid or $\beta$-mercaptopropionic acid. Preferred examples of such compounds are ethylene glycol bis(thioglycolate), pentaerythritol tetrakis(3-mercaptopropionate), ethylene glycol bis(3-mercaptopropionate), trimethylolpropane tris(thioglycolate), trimethylolpropane tris(3-mercaptopropionate) and pentaerythritol tetrakis(thioglycolate). A particularly preferred example of a preferred polymeric polythiol is polypropylene ether glycol bis(3-mercaptopropionate), such as a poly-2-mercaptoacetate ester or a poly-3-mercaptopropionate ester, such as the trimethylolpropane triesters or pentaerythritol tetraesters. Thiol terminated polysulfide compounds may also be used,

such as pentaerythritol tetrakis(3-mercaptopropionate) (PETMP) and trimethylolpropane tris (3-mercaptopropionate) (TMPTMP).

In accordance with the present invention, the polymer further comprises at least one photoinitiator $d_1$) and/or at least one co-initiator $d_2$), wherein the at least one photoinitiator $d_1$) and/or the at least one co-initiator $d_2$) comprises at least one functional group being selected from the group of ester groups, carboxylic acid groups, carboxylic acid chloride groups, carboxylic acid anhydride groups, hydroxyl groups, thiol groups, primary amine groups, halogen groups, epoxy groups, isocyanate groups, isothiocyanate groups and arbitrary combinations of two or more of the aforementioned groups.

A photoinitiator compound is defined in the present invention as a substance that may generate start radicals for the radical polymerization reaction of ethylenic double bonds, such as for vinyl ethers, (meth)acrylates or itaconates, when the substance is exposed to UV irradiation or to visible light. There are three classes of photoinitiators known for free radical polymerization reactions, namely type I photoinitiators, type II photoinitiators and co-initiators. The first class are type I photoinitiators, which are substances that undergo a fragmentation forming two radicals, when they are in the excited state. At least one of the radicals react as start radical for the radical polymerization reaction of ethylenic groups. For the class of type II photoinitiators a co-initiator (which is the third class of photoinitiator) is required to create the start radical. In the primary process after the photon absorption the photoinitiator abstracts a hydrogen atom from a co-initiator to produce a rather unreactive ketyl radical. Only the radical being created by the H atom abstraction from the co-initiator can react as start radical for the radical polymerization reaction. Typically type II photoinitiators are those of the group of benzophenones, thioxanthones, fluorenones, xanthones and anthraquinones. Co-initiators are typically tertiary amines, or more specifically aromatic tertiary amines, such as dimethylamino benzoates or derivatives thereof.

Particular good results are obtained, when the photoinitiator $d_1$) and/or the co-initiator $d_2$) is a compound being selected from the group of benzophenones, thioxanthones, xanthones and anthraquinones, ketocoumarins, carbazoles, $\alpha$-hydroxy ketones, a-aminoketones,benzoin ethers, benzil ketals, $\alpha,\beta$ ketoesters, camphorquinones, dimethylketals, acylphosphine oxides, tertiary amines, or more specifically aromatic tertiary amines, such as dimethylamino benzoates and arbitrary mixtures of two or more of the aforementioned compounds.

More preferably, the one or more photoinitiator compounds $d_1$) are selected from the group consisting of benzophenones and thioxanthones being functionalized as set out above, i.e. with functional groups being selected from the group consisting of ester groups, carboxylic acid groups, carboxylic acid chloride groups, carboxylic acid anhydride groups, hydroxyl groups, thiol groups, primary amine groups, halogen groups, epoxy groups, isocyanate groups, isothiocyanate groups and arbitrary combinations of two or more of the aforementioned groups.

Suitable specific examples for photoinitiator compounds $d_1$) are those being selected from the group consisting of 4-phenyl benzophenone, 1,1'-(methylene-di-4,1-phenylene)bis[2-hydroxy-2-methyl-1-propanone], 2-(4-Methylbenzyl)-2-(dimethylamino)-1-(4-morpholinophenyl)butan-1-one, 2,4,6-trimethylbenzoyldiphenylphosphine oxide, 2,4-diethylthioxanthone, 2-benzyl-2-(dimethylamino)-4'-morpholinobutyrophenone, 2-benzyl-2-dimethylamino-1-(4-morpholinylphenyl)-butanon-1, 2-ethyl anthraquinone, 2-methyl-1- [4-(methylthio) phenyl]-2-(4-morpholinyl)-1- propanone, benzene, benzildimethylketal, benzophenone, camphorquinone, chlorothioxanthone, ethoxyphenyl(2,4,6-trimethylbenzoyl)phosphine oxide, isopropylthioxanthone, methylbenzophenone, phenylbis(2,4,6-trimethylbenzoyl)phosphine oxide, polymeric benzophenone derivatives, thioxanthone, polymeric thioxanthone derivatives, 2-benzyl-2-(dimethylamino)-4'-morpholinobutyrophenone and arbitrary combinations of two or more of the aforementioned compounds being functionalized as set out above, i.e. with a functional group being selected from the group consisting of ester groups, carboxylic acid groups, carboxylic acid chloride groups, carboxylic acid anhydride groups, hydroxyl groups, thiol groups, primary amine groups, halogen groups, epoxy groups, isocyanate groups, isothiocyanate groups and arbitrary combinations of two or more of the aforementioned groups.

In accordance with a particular preferred embodiment of the present invention, the optional at least one carboxylic acid or carboxylic acid derivative e) comprising one or more carboxylic acid groups, carboxylic acid chloride groups or carboxylic acid anhydrides is reacted in the method, in one or more separate reaction steps, with the components a), b), c) and d).

The at least one carboxylic acid comprising one or more carboxylic acid groups, carboxylic acid chloride groups or carboxylic acid anhydride groups e) may be any compound, which comprises one or more carboxylic acid groups and/or one or more carboxylic acid chloride groups and/or one or more carboxylic acid anhydride groups. More specifically, the at least one carboxylic acid comprising one or more carboxylic acid groups, carboxylic acid chloride groups or carboxylic acid anhydride groups e) may comprise one or more groups being selected from aliphatic groups, aromatic groups, heterocyclic groups, alicyclic groups and arbitrary combinations of two or more of the aforementioned groups.

In a further development of the idea of the present invention it is proposed that the at least one carboxylic acid comprising one or more carboxylic acid groups e) is selected from the group consisting of 2-ethyl hexanoic acid, oleic acid, benzoic acid, tert-butyl benzoic acid, $C_{1-20}$-monocarboxylic acids, 2,4,6-trimethylbenzoic acid, adipic acid, succinic acid, sebacic acid, $C_{1-20}$-dicarboxylic acids, maleic acid, fumaric acid, phthalic acid, isophthalic acid, terephthalic acid, trimellitic acid, itaconic acid, glutaconic acid, traumatic acid, muconic acid, glutinic acid, citraconic acid, mesaconic acid

and arbitrary combinations of two or more of the aforementioned compounds.

In accordance with the present invention, the polymer is obtainable by a method, in which components a) to d) and optionally e) are reacted with each other in one reaction step or in two or more reaction steps. Preferred reaction schemes are mentioned further above. Independently from whether all components are reacted in one reaction step or in two or more separate reaction steps, it is preferred in all reaction steps that only the components a) to d) and optionally e) and, if necessary at all, the required amounts of catalyst, initiator, stabilizer, additive, solvent and other auxiliary agents are contained, i.e. no other components except of catalyst, initiator, stabilizer, additive, solvent and other auxiliary agents. In view thereof, it is preferred that the sum of all reaction mixtures comprises at least 25% by weight, preferably at least 50% by weight, more preferably at least 70% by weight, even more preferably at least 80% by weight, yet more preferably at least 90% by weight and still more preferably at least 95% by weight of sum of components a) to d) and optionally e). If no catalyst, initiator, stabilizer, additive, solvent and other auxiliary agent is necessary, it is even preferred that the sum of all reaction mixtures comprises 100% by weight of sum of components a) to d) and optionally e). The sum of reaction mixtures is the reaction mixture, if all components a) to d) and optionally e) are reacted in one step, or the sum of the two or more reaction mixtures, if two or more steps are comprised.

Examples for suitable catalysts, which may be added in the one or more reaction steps, are catalysts being selected from the group consisting of 2-ethylimidazole, zirconium octanoate, N,N-dimethylbenzylamine (BDMA), tertiary amines, such as tributylamine, triphenylphosphine, magnesium oxide, para-toluene sulfonic acid, methyl sulfonic acid, monobutyltin dihydroxychloride, concentrated sulfuric acid, stannous dichloride, stannous oxalate, monobutyltin tris(2-ethylhexanoate), dibutyltin diacetate, dibutyltin oxide and arbitrary combinations of two or more of the aforementioned catalysts. The one or more of these catalysts may be added preferably in an amount of 0.1 to 0.5% by weight based on the sum of reaction steps. Suitable catalysts for reacting a COOH group with one or more of OH-, SH- and $NH_2$-groups are those being selected from the group consisting of triphenylphosphine, magnesium oxide, para-toluene sulfonic acid, methyl sulfonic acid, monobutyltin dihydroxychloride, concentrated sulfuric acid, stannous dichloride, stannous oxalate, monobutyltin tris(2-ethylhexanoate), dibutyltin diacetate and dibutyltin oxide, whereas suitable catalysts for reacting an epoxy group with a COOH group are those being selected from the group consisting of 2-ethylimidazole, zirconium octanoate, N,N-dimethylbenzylamine (BDMA) and tertiary amines, such as tributylamine, and a suitable catalyst for reacting an epoxy group with one or more of OH- and NH2-groups is zirconium octanoate. Isocyanate and isothiocyanate groups may be reacted with one or more of OH- and SH-groups with a catalyst being selected from the group consisting of 1,4-Diazabicyclo(2.2.2)octane, Zr-octoate, dibutyl tin dilaurate, and zinc octoate.

Moreover, preferably up to 5% by weight, more preferably up to 2% by weight, still more preferably up to 1% by weight, yet more preferably up to 0.5% by weight and most preferably 0.01 to 0.15% by weight of one or more stabilisers, based on the total weight of the reaction mixtures, may be added in the one or more reaction steps. Suitable stabilisers are 4-methoxyphenole, phenothiazine, butylhydroxytoluene, hydroquinone (such as hydroquinone monomethylether (MeHQ)), copper(I) chloride, copper(II) sulfate and the like.

Also, one or more antioxidants, such as triphenylphosphine, hypophosphoric acid or the like, may be added in the one or more reaction steps, for instance in an amount of 0.01 to 1.00% by weight based on the total weight of the reaction mixtures.

Good results are in particular obtained, when in the one or more reaction steps the ratio of the molar equivalent of the sum of rosins a) and the sum of photoinitiators $d_1$) and co-initiators $d_2$) is 15:1 to 3:1.

Moreover, it is preferred that in the one or more reaction steps the ratio of the molar equivalent of the sum of polydienophile compounds b) and the sum of photoinitiators $d_1$) and co-initiators $d_2$) is 6:1 to 1:0.5.

In a further development of the idea of the present invention, it is proposed that in the one or more reaction steps the ratio of the molar equivalent of the sum of polyhydroxyl compounds $c_1$), polyepoxy compounds $c_2$), polyamine compounds $c_3$) and polythiol compounds $c_4$) and the sum of photoinitiators $d_1$) and co-initiators $d_2$) is 20:1 to 2:1.

In accordance with a further particular preferred embodiment of the present invention, in the one or more reaction steps the ratio of the molar equivalent of the sum of carboxylic acids e) and the sum of photoinitiators $d_1$) and co-initiators $d_2$) is 0 to 10:1.

Furthermore, it is preferred that the polymer contains 1 to 20% by weight of sum of photoinitiators $d_1$) and co-initiators $d_2$) based on 100% by weight of the total weight of the polymer.

Independently from the process, with which the polymer has been prepared, the polymer in accordance with the present invention preferably comprises at least one of the subsequent substructural units of general formulae (2) to (4) and at least one of the subsequent substructural units of general formulae (5) to (7) and at least one of the subsequent substructural units of general formulae (9) to (13) and optionally also the subsequent substructural unit of general formula (8), wherein all these at least three structural units may be arbitrarily connected with each other:

i) Substructural unit in accordance with general formula (2):

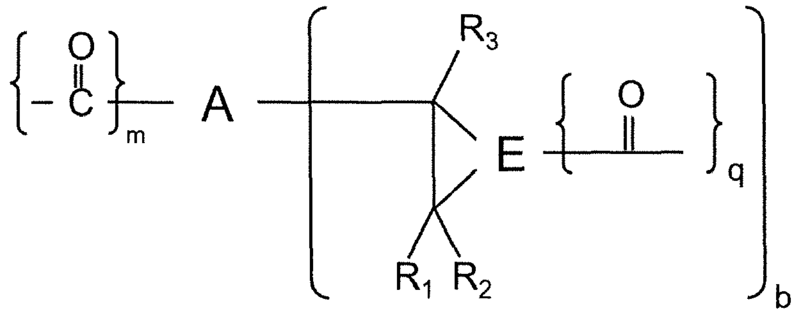

(2)

wherein:

| | |
|---|---|
| $R_1$-$R_3$ | are as defined above with regards to general formula (1), |
| A | is a group corresponding to the polydienophile compound b) except the two or more carbon-carbon double bonds which have been reacted with the rosin acid a) to form a single bond and except the optional carboxylic groups that are part of the linkage to other substructural units, |
| E | is a group corresponding to the part of the rosin acid a) except the terminal one or two carboxylic acid groups, |
| b | is an integer of 1 to 20, |
| m | is the functionality of optional carboxylic groups of the polydienophile compound b) that have reacted with the other substructural units, i.e. m is 0, if the polydienophile compound b) does not contain any carboxylic group, and |
| q | is an integer of 1 or 2. |

ii) Substructural unit in accordance with general formula (3):

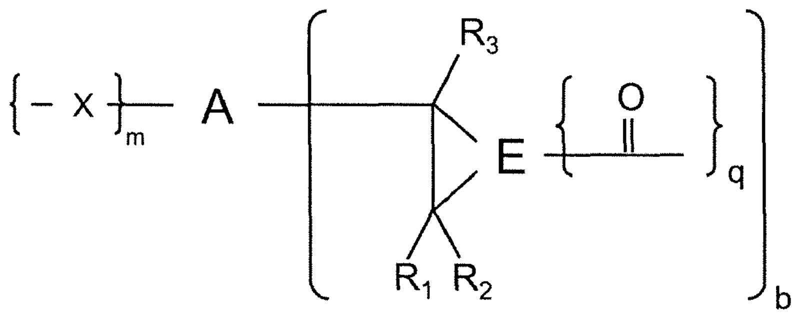

(3)

wherein:

| | |
|---|---|
| $R_1$-$R_3$ | are as defined above with regards to general formula (1), |
| A | is a group corresponding to polydienophile compound b) except the two or more carbon-carbon double bonds which have been reacted with the rosin acid to form a single bond and except the optional hydroxyl groups or thiol groups that are part of the linkage to other substructural units, |
| E | is a group corresponding to the part of the rosin acid a) except the terminal one or two carboxylic acid groups, |
| X | is either O or S, |
| b | is an integer of 1 to 20, |
| m | is the functionality of optional hydroxyl groups or thiol groups of the polydienophile compound b) that have reacted with the other substructural units. m being 0, if the polydienophile compound b) does not contain any hydroxyl groups or thiol groups and |
| q | is an integer of 1 or 2. |

iii) Substructural unit in accordance with general formula (4):

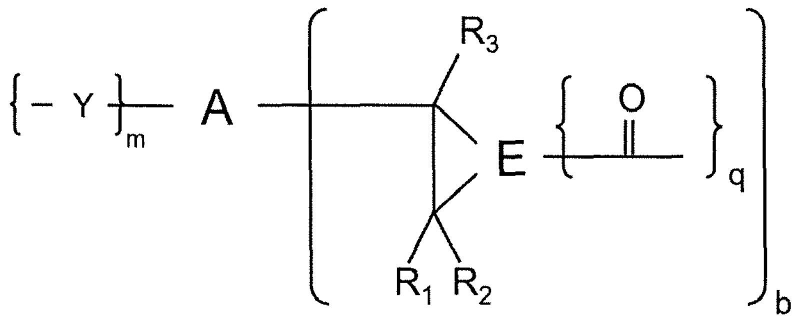

(4)

wherein:

- $R_1$-$R_3$ as defined above with regards to general formula (1),
- A is a group corresponding to polydienophile compound b) except the two or more carbon-carbon double bonds which have been reacted with the rosin acid to form a single bond and except the optional epoxy groups that are part of the linkage to other substructural units,
- E is a group corresponding to the part of the rosin acid a) except the terminal one or two carboxylic acid groups,
- Y is either $-CH(OH)-CH_2-$, $-CH(CH_2OH)-$, $-CH(OH)-CH_2-O-$ or $-CH(CH_2OH)-O-$,
- b is an integer of 1 to 20,
- m is the functionality of optional epoxy groups of the polydienophile compound b) that have reacted with the other substructural units. m being 0, if the polydienophile compound b) does not contain any epoxy groups and
- q is an integer of 1 or 2.

iv) Substructural unit in accordance with general formula (5):

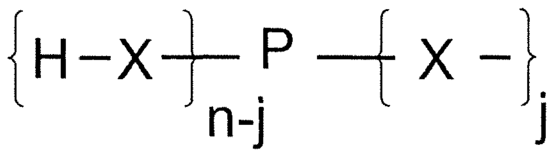

(5)

wherein:

- P is a group corresponding to a polyhydroxyl-functionalized compound $c_1$) except the hydroxyl groups and/or a group corresponding to a polythiol compounds $c_4$) except the thiol groups,
- X is either O or S,
- n is the functionality of the polyhydroxyl compound $c_1$) and/or of the polythiol compound $c_4$) and
- j is an integer of 1 to n.

v) Substructural unit in accordance with general formula (6):

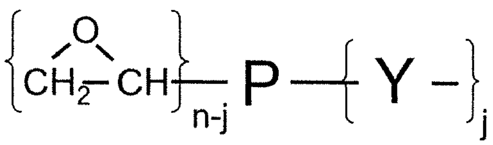

(6)

wherein:

- P is a group corresponding to a polyepoxy-functionalized compound $c_2$) except the terminal epoxy groups,
- Y is either $-CH(OH)-CH_2-$, $-CH(CH_2OH)-$, $-CH(OH)-CH_2-O-$ or $-CH(CH_2OH)-O-$,

n is the functionality of the polyepoxy compound $c_2$) and
j is an integer of 2 to n.

vi) Substructural unit in accordance with general formula (7):

$$\left\{NH_2-\right\}_{n-j} P -\left\{NH-\right\}_j \qquad (7)$$

wherein:

P is a group corresponding to a polyamine-functionalized compound $c_3$) except the terminal amine groups,
n is the functionality of the polyamine-functionalized compound $c_3$) and
j is an integer of 1 to n.

vii) One or more substructural units in accordance with general formula (8):

$$\left\{HOOC-\right\}_{o-jj} M -\left\{CO-\right\}_{jj} \qquad (8)$$

wherein:

M is the part of the at least one carboxylic acid compound or carboxylic acid derivative e) except the at least one carboxylic group, carboxylic acid chloride group or carboxylic acid anhydride group,
o is the functionality of the at least one carboxylic acid compound e) and
jj is an integer of 1 to o.

viii) Substructural unit in accordance with general formula (9):

$$I -\left\{X-\right\}_{jjj} \qquad (9)$$

wherein:

I is the part of the photoinitiator and/or co-initiator compound $d_1$) and $d_2$) except the at least one functional group, which is in this embodiment one or more hydroxyl or one or more thiol groups,
X is either O or S and
jjj is the functionality of the at least one photoinitiator compound $d_1$) or of the at least one co-initiator compound $d_2$).

ix) Substructural unit in accordance with general formula (10):

$$I -\left\{NH-\right\}_{jjj} \qquad (10)$$

wherein:

I is the part of the photoinitiator and/or co-initiator compound $d_1$) and $d_2$) except the at least one functional group, which is in this embodiment one or more primary amine groups,

jjj is the functionality of the at least one photoinitiator compound $d_1$) or of the at least one co-initiator compound $d_2$).

x) Substructural unit in accordance with general formula (11):

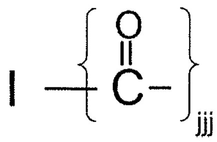

(11)

wherein:

I is the part of the photoinitiator and/or co-initiator compound $d_1$) and $d_2$) except the at least one functional group, which is in this embodiment one or more ester groups, one or more carboxylic acid groups, one or more carboxylic acid chloride groups or one or more carboxylic acid anhydrides, and

jjj is the functionality of the at least one photoinitiator compound $d_1$) or of the at least one co-initiator compound $d_2$).

xi) Substructural unit in accordance with general formula (12):

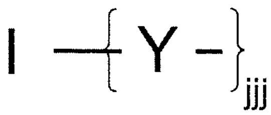

(12)

wherein:

I is the part of the photoinitiator and/or co-initiator compound $d_1$) and $d_2$) except the at least one functional group, which is in this embodiment one or more epoxy groups,

Y is either $-CH(OH)-CH_2-$, $-CH(CH_2OH)-$, $-CH(OH)-CH_2-O-$ or $-CH(CH_2OH)-O-$ and

jjj is the functionality of the at least one photoinitiator compound $d_1$) or of the at least one co-initiator compound $d_2$).

xii) Substructural unit in accordance with general formula (13):

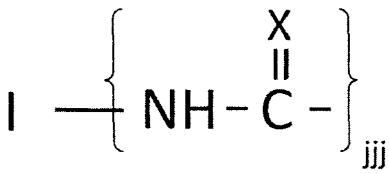

(13)

wherein:

I is the part of the photoinitiator and/or co-initiator compound $d_1$) and $d_2$) except the at least one functional group, which is in this embodiment one or more isocyanate or isothiocyanate groups,

X is either O or S and

jjj is the functionality of the at least one photoinitiator compound $d_1$) or of the at least one co-initiator compound $d_2$).

For instance, the polymer in accordance with the present invention comprises one of the substructural units of general formulae (2) to (4) plus one of the substructural units of general formulae (5) to (7) plus one of the substructural units of general formulae (9) to (13), but no further of these substructural units and no substructural unit of general formula (8). Alternatively, the polymer in accordance with the present invention comprises one of the substructural units

of general formulae (2) to (4) plus one of the substructural units of general formulae (5) to (7) plus one of the substructural units of general formulae (9) to (13) plus the substructural unit of general formula (8), but no further of these substructural units. Still alternatively, the polymer may comprise two or three of the substructural units of general formulae (2) to (4). Also, the polymer may comprise two or three of the substructural units of general formulae (5) to (7). Likewise, the polymer may comprise two, three, four or five of the substructural units of general formulae (9) to (13). Further, the polymer may comprise two, three or more substructural units of general formula (8).

In accordance with a preferred embodiment of the present invention, the polymer comprises one or more substructural units in accordance with general formula (14) plus at least one substructural unit of general formulae (5) to (7), plus at least one substructural unit of general formulae (9) to (13), plus optionally a substructural unit of general formula (8):

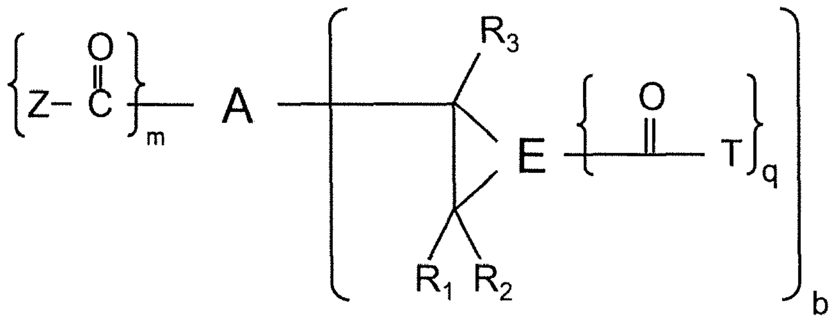

(14)

wherein:

- Z is a bond linking the substructure of general formula (14) with the substructure of general formula (5) and/or general formula (6) and/or general formula (7) and/or general formula (9) and/or general formula (10) and/or general formula (12),
- T is a bond linking the substructure of general formula (14) with the substructure of general formula (5) and/or general formula (6) and/or general formula (7) and/or general formula (9) and/or general formula (10) and/or general formula (12) and

all other groups and indices are as described above for the general formula (2).

In accordance with a preferred embodiment of the present invention, the polymer comprises one or more substructural units in accordance with general formula (15) plus at least one substructural unit of general formulae (5) to (7), plus at least one substructural unit of general formulae (9) to (13), plus optionally a substructural unit of general formula (8)::

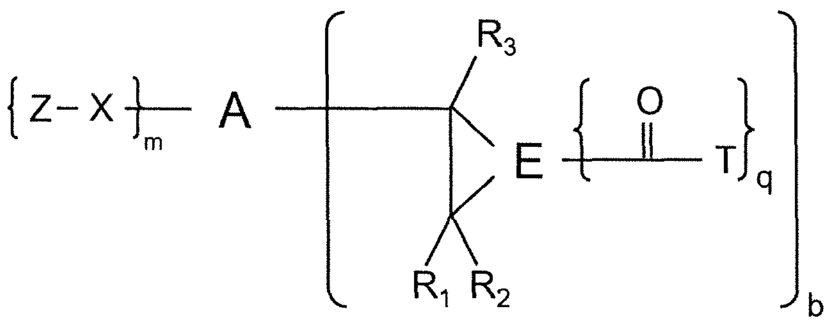

(15)

wherein:

- Z is a bond linking the substructure of general formula (15) with the substructure of general formula (6) and/or general formula (8) and/or general formula (11) and/or general formula (12) and/or general formula (13),
- T is a bond linking the substructure of general formula (15) with the substructure of general formula (5) and/or general formula (6) and/or general formula (7) and/or general formula (9) and/or general formula (10) and/or general formula

(12) and

all other groups and indices are as described above for the general formula (3).

In accordance with a preferred embodiment of the present invention, the polymer comprises one or more substructural units in accordance with general formula (16) plus at least one substructural unit of general formulae (5) to (7), plus at least one substructural unit of general formulae (9) to (13), plus optionally a substructural unit of general formula (8):

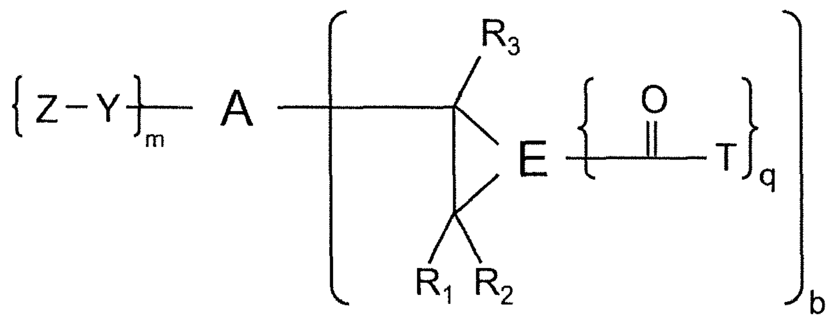

(16)

wherein:

Z is a bond linking the substructure of general formula (16) with the substructure of general formula (5) and/or general formula (7) and/or general formula (8) and/or general formula (9) and/or general formula (10) and/or general formula (11),

T is a bond linking the substructure of general formula (16) with the substructure of general formula (5) and/or general formula (6) and/or general formula (7) and/or general formula (9) and/or general formula (10) and/or general formula (12) and

all other groups and indices are as described above for the general formula (4).

In accordance with a preferred embodiment of the present invention, the polymer comprises one or more substructural units in accordance with general formula (17) plus at least one substructural unit of general formulae (2) to (4), plus at least one substructural unit of general formulae (9) to (13), plus optionally a substructural unit of general formula (8):

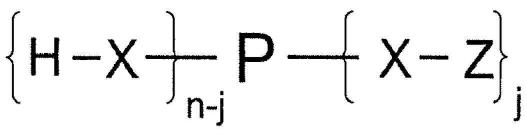

(17)

wherein:

Z is a bond linking the substructure of general formula (17) with the substructure of general formula (2) and/or general formula (3) and/or general formula (4) and/or general formula (8) and/or general formula (11) and/or general formula (12) and/or general formula (13) and

all other groups and indices are as described above for the general formula (5).

In accordance with a preferred embodiment of the present invention, the polymer comprises one or more substructural units in accordance with general formula (18) plus at least one substructural unit of general formulae (2) to (4), plus at least one substructural unit of general formulae (9) to (13), plus optionally a substructural unit of general formula (8):

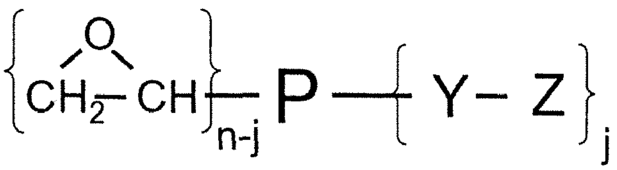

(18)

wherein:

Z is a bond linking the substructure of general formula (18) with the substructure of general formula (2) and/or general formula (3) and/or general formula (4) and/or general formula (8) and/or general formula (9) and/or general formula (10) and/or general formula (11) and

all other groups and indices are as described above for the general formula (6).

In accordance with a preferred embodiment of the present invention, the polymer comprises one or more substructural units in accordance with general formula (19) plus at least one substructural unit of general formulae (2) to (4), plus at least one substructural unit of general formulae (9) to (13), plus optionally a substructural unit of general formula (8):

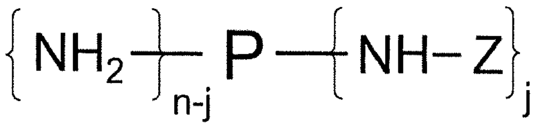

(19)

wherein:

Z is a bond linking the substructure of general formula (19) with the substructure of general formula (2) and/or general formula (3) and/or general formula (4) and/or general formula (8) and/or general formula (11) and/or general formula (12) and/or general formula (13) and

all other groups and indices are as described above for the general formula (7).

In accordance with a preferred embodiment of the present invention, the polymer comprises one or more substructural units in accordance with general formula (20) plus at least one substructural unit of general formulae (2) to (4) plus at least one substructural unit of general formulae (5) to (7), plus at least one substructural unit of general formulae (9) to (13):

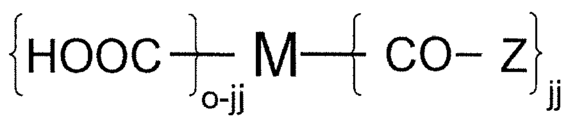

(20)

wherein:

Z is a bond linking the substructure of general formula (20) with the substructure of general formula (3) and/or general formula (4) and/or general formula (5) and/or general formula (6) and/or general formula (7) and/or general formula (9) and/or general formula (10) and/or general formula (12) and

all other groups and indices are as described above for the general formula (8).

In accordance with a preferred embodiment of the present invention, the polymer comprises one or more substructural units in accordance with general formula (21) plus at least one substructural unit of general formulae (2) to (4), plus at least one substructural unit of general formulae (5) to (7), plus optionally a substructural unit of general formula (8):

$$I - \{X - Z\}_{jjj} \quad (21)$$

wherein:

Z is a bond linking the substructure of general formula (21) with the substructure of general formula (2) and/or general formula (3) and/or general formula (4) and/or general formula (6) and/or general formula (8) and

all other groups and indices are as described above for the general formula (9).

In accordance with a preferred embodiment of the present invention, the polymer comprises one or more substructural units in accordance with general formula (22) plus at least one substructural unit of general formulae (2) to (4), plus at least one substructural unit of general formulae (5) to (7), plus optionally a substructural unit of general formula (8):

$$I - \{NH - Z\}_{jjj} \quad (22)$$

wherein:

Z is a bond linking the substructure of general formula (22) with the substructure of general formula (2) and/or general formula (3) and/or general formula (4) and/or general formula (6) and/or general formula (8) and

all other groups and indices are as described above for the general formula (10).

In accordance with a preferred embodiment of the present invention, the polymer comprises one or more substructural units in accordance with general formula (23) plus at least one substructural unit of general formulae (2) to (4), plus at least one substructural unit of general formulae (5) to (7), plus optionally a substructural unit of general formula (8):

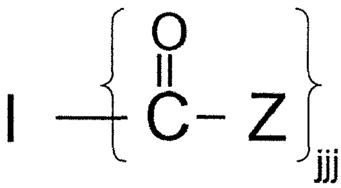

(23)

wherein:

Z is a bond linking the substructure of general formula (23) with the substructure of general formula (3) and/or general formula (4) and/or general formula (5) and/or general formula (6) and/or general formula (7) and

all other groups and indices are as described above for the general formula (11).

In accordance with a preferred embodiment of the present invention, the polymer comprises one or more substructural units in accordance with general formula (24) plus at least one of the substructural unit of general formulae (2) to (4), plus at least one substructural unit of general formulae (5) to (7), plus optionally a substructural unit of general formula (8):

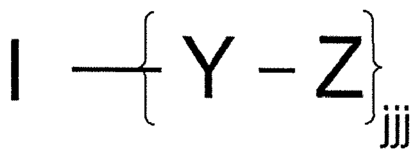

(24)

wherein:

Z is a bond linking the substructure of general formula (24) with the substructure of general formula (2) and/or general formula (3) and/or general formula (4) and/or general formula (5) and/or general formula (7) and/or general formula (8) and

all other groups and indices are as described above for the general formula (12).

In accordance with a preferred embodiment of the present invention, the polymer comprises one or more substructural units in accordance with general formula (25) plus at least one of the substructural unit of general formulae (2) to (4), plus at least one substructural unit of general formulae (5) to (7), plus optionally a substructural unit of general formula (8):

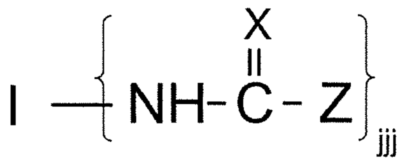

(25)

wherein:

Z is a bond linking the substructure of general formula (25) with the substructure of general formula (3) and/or general formula (5) and/or general formula (7) and

all other groups and indices are as described above for the general formula (13).

In specific embodiments, in which the at least one polydienophile compound b) are a polyacrylate, the polymer may comprise one or more of the subsequent structural units:

In accordance with a preferred embodiment of the present invention, the polymer comprises one or more substructural units in accordance with general formula (26) plus at least one substructural unit of general formulae (5) to (7), plus at least one substructural unit of general formulae (9) to (13), plus optionally a substructural unit of general formula (8):

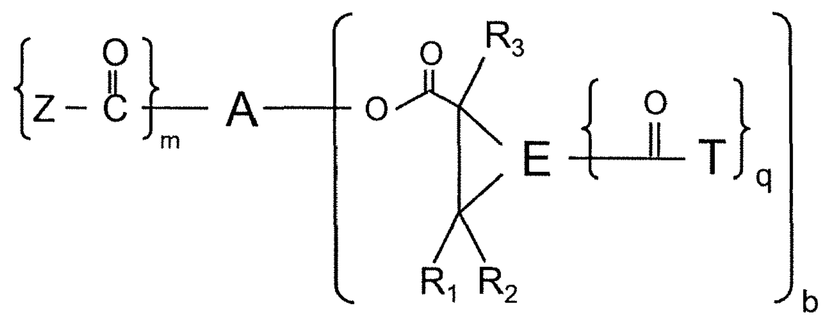

(26)

wherein:

Z is a bond linking the substructure of general formula (26) with the substructure of general formula (5) and/or general formula (6) and/or general formula (7) and/or general formula (9) and/or general formula (10) and/or general formula (12),

T is a bond linking the substructure of general formula (26) with the substructure of general formula (5) and/or general formula (6) and/or general formula (7) and/or general formula (9) and/or general formula (10) and/or general formula

(12) and

all other groups and indices are as described above for the general formula (2).

In accordance with a preferred embodiment of the present invention, the polymer comprises one or more substructural units in accordance with general formula (27) plus at least one substructural unit of general formulae (5) to (7), plus at least one substructural unit of general formulae (9) to (13), plus optionally a substructural unit of general formula (8):

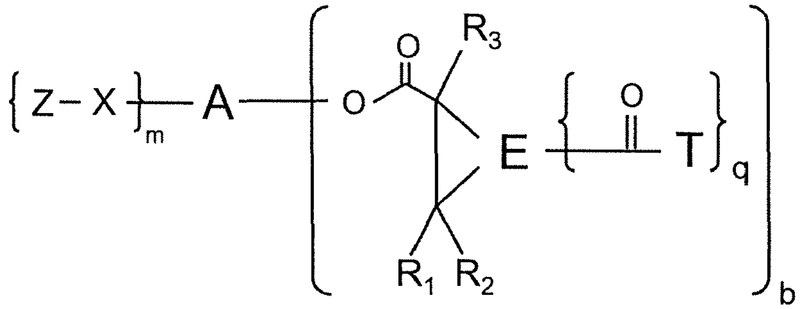

(27)

wherein:

- Z is a bond linking the substructure of general formula (27) with the substructure of general formula (6) and/or general formula (8) and/or general formula (11) and/or general formula (12) and/or general formula (13),
- T is a bond linking the substructure of general formula (27) with the substructure of general formula (5) and/or general formula (6) and/or general formula (7) and/or general formula (9) and/or general formula (10) and/or general formula (12) and

all other groups and indices are as described above for the general formula (3).

In accordance with a preferred embodiment of the present invention, the polymer comprises one or more substructural units in accordance with general formula (28) plus at least one substructural unit of general formulae (5) to (7), plus at least one substructural unit of general formulae (9) to (13), plus optionally a substructural unit of general formula (8):

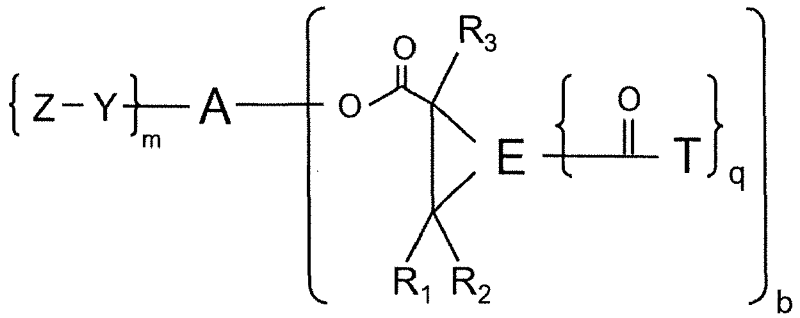

(28)

wherein:

- Z is a bond linking the substructure of general formula (28) with the substructure of general formula (5) and/or general formula (7) and/or general formula (8) and/or general formula (9) and/or general formula (10) and/or general formula (11),
- T is a bond linking the substructure of general formula (28) with the substructure of general formula (5) and/or general formula (6) and/or general formula (7) and/or general formula (9) and/or general formula (10) and/or general formula (12) and

all other groups and indices are as described above for the general formula (4).

In an even more specific embodiment, in which the at least one rosin acid containing at least two conjugated carbon-carbon double bonds a) is levopimaric acid and the at least one dienophile compound b) is a polyacrylate, the polymer may comprise one or more of the structural units:

In accordance with a preferred embodiment of the present invention, the polymer comprises one or more substructural units in accordance with general formula (29) plus at least one substructural unit of general formulae (5) to (7), plus at least one substructural unit of general formulae (9) to (13), plus optionally a substructural unit of general formula (8)::

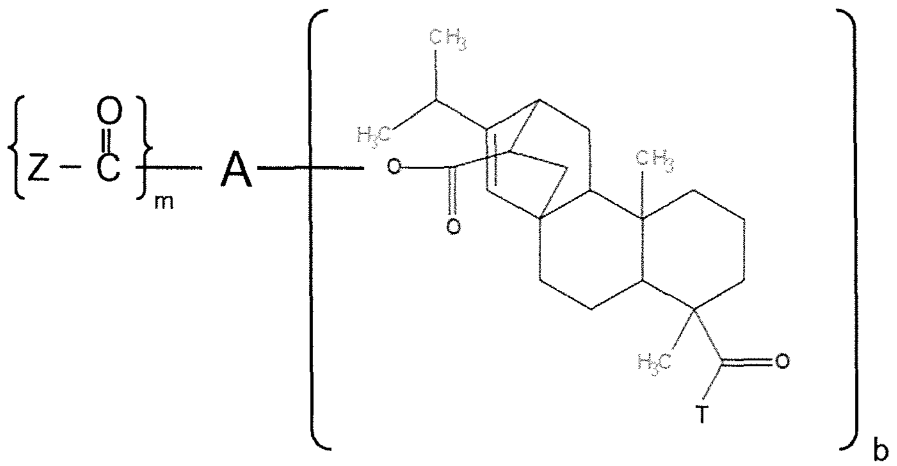

(29)

wherein:

- Z is a bond linking the substructure of general formula (29) with the substructure of general formula (5) and/or general formula (6) and/or general formula (7) and/or general formula (9) and/or general formula (10) and/or general formula (12),
- T is a bond linking the substructure of general formula (29) with the substructure of general formula (5) and/or general formula (6) and/or general formula (7) and/or general formula (9) and/or general formula (10) and/or general formula (12) and

all other groups and indices are as described above for the general formula (2).

In accordance with a preferred embodiment of the present invention, the polymer comprises one or more substructural units in accordance with general formula (30) plus at least one substructural unit of general formulae (5) to (7), plus at least one substructural unit of general formulae (9) to (13), plus optionally a substructural unit of general formula (8):

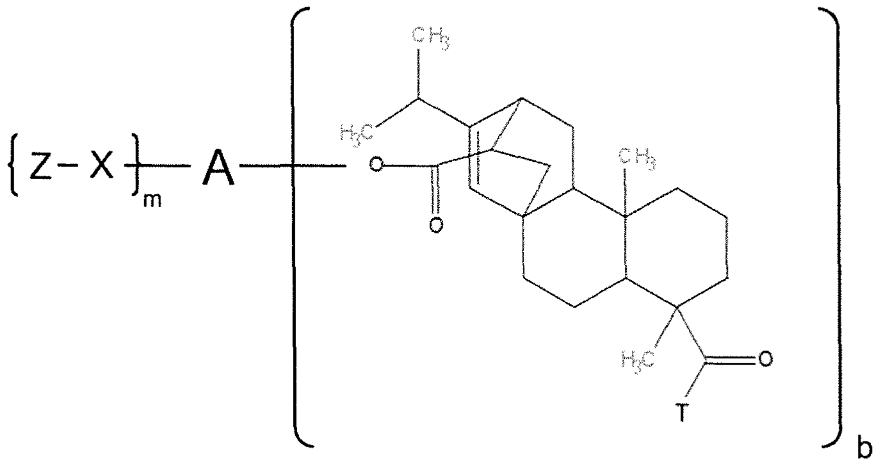

(30)

wherein:

Z is a bond linking the substructure of general formula (30) with the substructure of general formula (6) and/or general formula (8) and/or general formula (11) and/or general formula (12) and/or general formula (13),

T is a bond linking the substructure of general formula (30) with the substructure of general formula (5) and/or general formula (6) and/or general formula (7) and/or general formula (9) and/or general formula (10) and/or general formula (12) and

all other groups and indices are as described above for the general formula (3).

In accordance with a preferred embodiment of the present invention, the polymer comprises one or more substructural units in accordance with general formula (30) plus at least one substructural unit of general formulae (5) to (7), plus at least one substructural unit of general formulae (9) to (13), plus optionally a substructural unit of general formula (8):

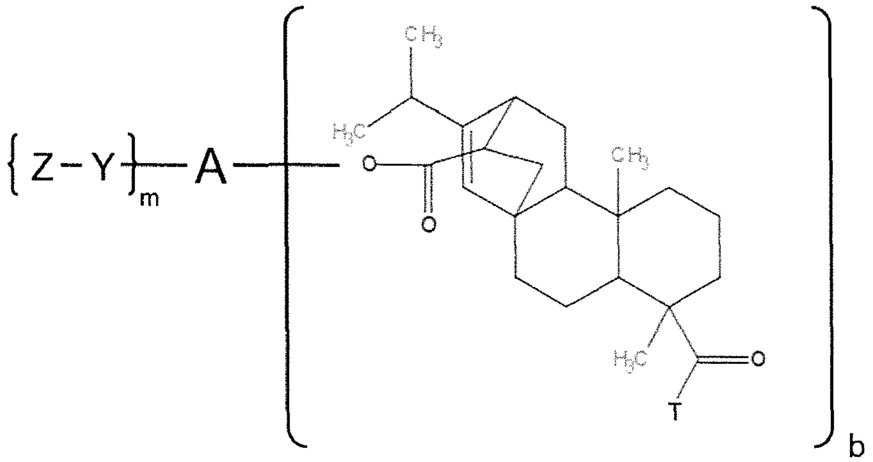

(31)

wherein:

Z is a bond linking the substructure of general formula (31) with the substructure of general formula (5) and/or general formula (7) and/or general formula (8) and/or general formula (9) and/or general formula (10) and/or general formula (11),

T is a bond linking the substructure of general formula (31) with the substructure of general formula (5) and/or general formula (6) and/or general formula (7) and/or general formula (9) and/or general formula (10) and/or general formula (12) and

all other groups and indices are as described above for the general formula (4).

A further particular preferred embodiment of the present invention refers to a polymer comprising as at least one rosin acid containing at least two conjugated carbon-carbon double bonds a) levopimaric acid and as at least one polydienophile compound b) a three times propoxylated glycerin triacrylate, which is a polymer comprising one or more substructural units in accordance with general formula (32) plus at least one substructural unit of general formulae (5) to (7), plus at least one substructural unit of general formulae (9) to (13), plus optionally a substructural unit of general formula (8):

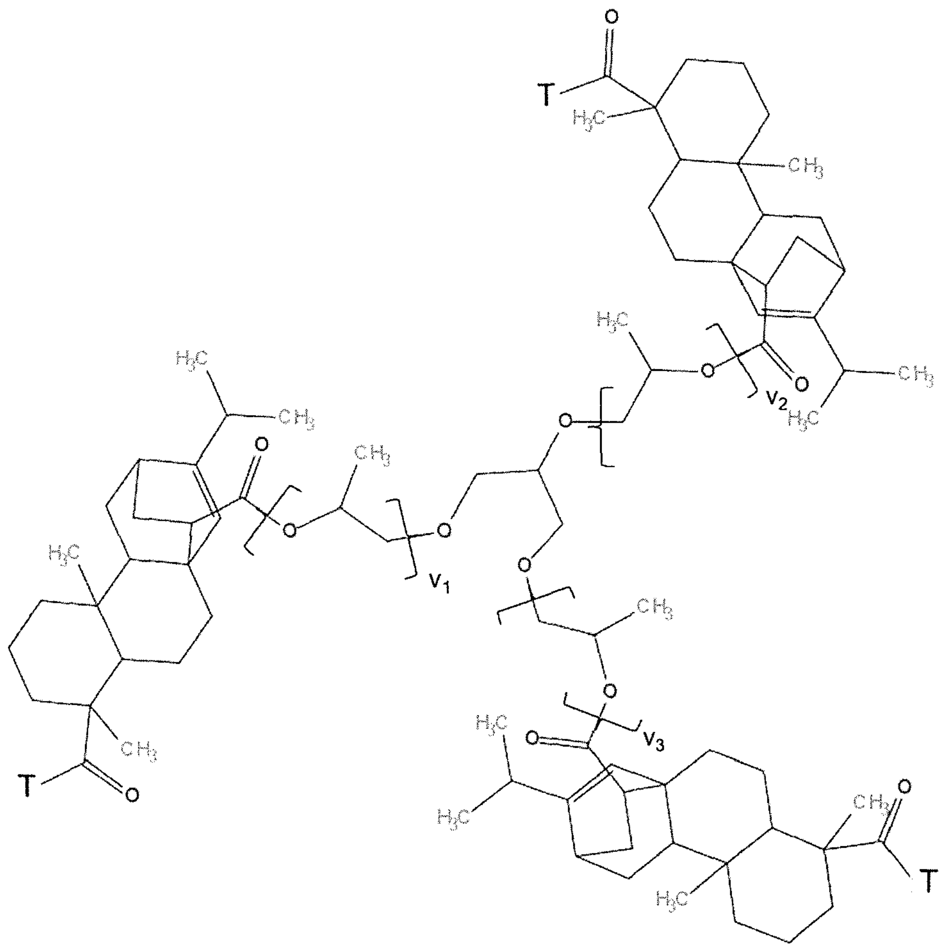

(32)

wherein:

- T is a bond linking the substructure of general formula (31) with the substructure of general formula (5) and/or general formula (6) and/or general formula (7) and/or general formula (9) and/or general formula (10) and/or general formula (12) and
- $v_{1-3}$ are integers of 0 to 3. The sum of $v_1$, $v_2$ and $v_3$ is 3.

In a further development of the idea of the present invention, it is suggested that the polymer has a weight average molecular weight $M_w$ measured by gel permeation chromatography of 600 to 50,000 g/mol, preferably of 1,000 to 50,000 g/mol and more preferably of 4,000 to 30,000 g/mol.

Moreover, it is preferred that the polymer has a number average molecular weight $M_n$ measured by gel permeation chromatography of 100 to 30,000 g/mol, preferably of 500 to 20,000 g/mol and more preferably of 700 to 10,000 g/mol.

In accordance with the present invention, the weight average molecular weight $M_w$ and number average molecular weight $M_n$ of the polymer is calculated from the molecular weight distribution determined by means of gel permeation chromatography. Preferably, a linear polystyrene standard is used. Such standards may be obtained from PSS Polymer Standards Service GmbH, Mainz, Germany. For instance, an Agilent 1200 liquid chromatography device equipped with three SDV GPC columns from PSS Polymer Standards Service GmbH, Mainz, Germany with dimensions of 300 x 8 mm (with particle size porosities of 50 Å, 1,000 Å and 100,000 Å) and a refractive index detector. The mobile phase is tetrahydrofuran, and the flow rate is set to 1 ml/min. The gel permeation chromatography is calibrated with help of 15 linear polystyrene standards from PSS Polymer Standards Service GmbH, Mainz, Germany, ranging from 266 to 2.5 x $10^6$ g/mol. The samples are for instance prepared by dissolving 100 mg of the polymer sample in 10 ml tetrahydrofuran and then 100µl of the sample solution in THF is injected into the GPC column. The column oven temperature is 30°C, the temperature of the RI-Detector (refractive index) is 35°C and the flow rate 1 ml/min.

In accordance with a further preferred embodiment of the present invention, the polymer in accordance with the present invention has an acid number of 0 to 80 mg KOH/g, preferably of 0 to 50 mg KOH/g and more preferably of 1 to 20 mg KOH/g. Preferably, the acid number of the polymer is measured by titration. The quantity of KOH (given in mg) that is needed to neutralize 1 g of the substance is determined. For instance, the acid number of the polymer is measured as follows: An accurate quantity of about 2.0 g of the polymer to be measured is weighed with an accuracy of +/- 0.01 g into 25 ml of the prepared solvent mixture of 2 parts of toluene and 1 part of ethanol. The material is dissolved at room temperature or, if it does not dissolve at room temperature, at 60°C. Then, the mixture is cooled to room temperature and 2 to 3 drops of phenolphthalein indicator solution (1% dissolved in ethanol) are added and the mixture is titrated against 0.5 mol/L ethanolic KOH solution with a burette until a permanent light pink color is obtained for at least 30 seconds. The acid value is calculated according to the following formula:

Acid value = (56.1 g/mol x Volume (in L) ethanolic KOH solution added x concentration of KOH solution (in mol/L)) / mass of the material (rosin-based inert resin) weighed in (in g).

In accordance with still a further preferred embodiment of the present invention, the polymer in accordance with the present invention has a softening point of 40 to 200°C, preferably of 70 to 160°C and more preferably of 80 to 150°C. In accordance with the present invention the softening point is determined by using the ring and ball method in accordance with ASTM D36. The molten polymer sample is poured into the ring of the ball and ring apparatus. After the resin sample has cooled down the ball is placed on the resin and the whole apparatus placed in a silicone bath equipped with a thermometer and a stirrer. The silicone bath is placed on a hot plate to heat it to a temperature of 180°C. When the temperature of the silicone bath reaches the softening temperature of the resin the ball starts to sink down.

In accordance with still a further preferred embodiment of the present invention, the polymer in accordance with the present invention has a viscosity, when diluted in 50% 1,2 dipropylene glycol diacrylate (in the following denoted as DPGDA), of 1 to 300 Pa·s, preferably of 1 to 200 Pa·s and more preferably of 10 to 100 Pa·s. In accordance with the present invention the viscosity is determined by using a Physica MCR 100 Rheometer from Anton Paar GmbH, Graz, Austria with a cone-plate geometry. The cone has a diameter of 25 mm and an angle of 1°. The gap of the cone and the plate is 0.05 mm, the temperature is set to 20°C and the viscosity is determined at a deformation rate of 50 radian/s.

The polymer according to the present invention may be in particular branched or hyper-branched.

A further aspect of the present invention is a method for producing a polymer in accordance with the present invention, comprising reacting in one or more steps:

a) at least one rosin acid containing at least two conjugated double bonds,
b) at least one polydienophile compound comprising two or more carbon-carbon double bonds,
c) at least one compound selected from the group consisting of polyhydroxyl compounds $c_1$), polyepoxy compounds $c_2$), polyamine compounds $c_3$), polythiol compounds $c_4$) and arbitrary combinations of two or more of the aforementioned compounds and
d) at least one photoinitiator $d_1$) and/or at least one co-initiator $d_2$), wherein the at least one photoinitiator $d_1$) and/or the at least one co-initiator $d_2$) comprises at least one functional group being selected from the group of ester groups, carboxylic acid groups, carboxylic acid chloride groups, carboxylic acid anhydride groups, hydroxyl groups, thiol groups, primary amine groups, halogen groups, epoxy groups, isocyanate groups, isothiocyanate groups and arbitrary combinations of two or more of the aforementioned compounds.

Preferably, the method for producing a polymer in accordance with the present invention also comprises reacting in one or more steps with components a) to d) at least carboxylic acid or carboxylic acid derivative e) comprising one or more carboxylic acid groups, carboxylic acid chloride groups or carboxylic acid anhydride groups.

The specifics mentioned above for the polymer are also valid for the method.

In accordance with the present invention, the polymer is obtainable by a method comprising the reaction of compounds a) and b) and c) and d) and optionally e). These compounds may be reacted in one step or in two or more steps, which may be performed in any order.

For instance, the compounds a) to d) and optionally e) are mixed and reacted in one step at a suitable temperature, preferably at a temperature of 230 to 280°C.

Alternatively, firstly compounds a) and b) are reacted so as to produce a first reaction product, preferably at a temperature of 230 to 280°C, before the so obtained reaction product is reacted in a second step preferably at a temperature of 230 to 280°C with the compounds c), d) and optionally e).

Alternatively, the compounds a) and b) are reacted so as to produce a first reaction product, preferably at a

temperature of 230 to 280°C, before the so obtained first reaction product is reacted in a second step preferably at a temperature of 230 to 280°C with the compounds c) and e) to produce the second reaction product, before the so obtained second reaction product is reacted preferably at a temperature of 230 to 280°C with compound d) to produce the polymer. This embodiment is particularly preferred, if the compound d) is at least one photoinitiator $d_1$) and/or at least one co-initiator $d_2$), wherein the at least one photoinitiator $d_1$) and/or the at least one co-initiator $d_2$) comprises at least one isocyanate group as functional group.

According to still an alternative embodiment, the compounds a) and d) are reacted so as to produce a first reaction product, preferably at a temperature of 230 to 280°C, before the so obtained first reaction product is reacted in a second step preferably at a temperature of 230 to 280°C with the compound b) so as to produce a second reaction product, before the so obtained second reaction product is reacted preferably at a temperature of 230 to 280°C with compounds c) and e) to produce the polymer. This embodiment is particularly preferred, if the compound d) is at least one photoinitiator $d_1$) and/or at least one co-initiator $d_2$), wherein the at least one photoinitiator $d_1$) and/or the at least one co-initiator $d_2$) comprises at least one hydroxyl group and/or at least one amine group as functional group.

According to still an alternative embodiment, the compounds a) and c) are reacted preferably at a temperature of 230 to 280°C so as to produce a first reaction product, before the so obtained first reaction product is reacted in a second step preferably at a temperature of 230 to 280°C with the compound b) so as to produce a second reaction product, before the so obtained second reaction product is reacted preferably at a temperature of 230 to 280°C with compounds e) and d) to produce the polymer. This embodiment is particularly preferred, if the compound d) is at least one photoinitiator $d_1$) and/or at least one co-initiator $d_2$), wherein the at least one photoinitiator $d_1$) and/or the at least one co-initiator $d_2$) comprises at least one epoxy group and/or at least one amine group as functional group.

In accordance with yet an alternative embodiment, the compounds c) and d) are reacted preferably at a temperature of 230 to 280°C so as to produce a first reaction product and separately therefrom compounds a) and b) are reacted preferably at a temperature of 230 to 280°C so as to produce a second reaction product, before the so obtained first reaction product is reacted preferably at a temperature of 230 to 280°C with the second reaction product and compound e).

According to still a further aspect, the present invention is related to a coating composition, which comprises:

- 1 to 50% by weight of the aforementioned polymer,
- 10 to 60% by of weight binder,
- 0 to 40% by weight of solvent,
- 0 to 40% by weight of pigment,
- 0 to 20% by weight of one or more fillers,
- 0 to 10% by weight of one or more additives and
- 0 to 10% by weight of one or more photoinitiators and/or co-initiators.

It is preferred that the coating composition contains at least one diacrylate compound, such as dipropyleneglycol diacrylate (DPGDA), tripropyleneglycol diacrylate (TPGDA) and 1,6-hexanediol diacrylate (HDDA).

The binder is preferably selected from the group consisting of (meth)acrylate monomers, oligomers and mixtures thereof. Suitable examples therefore are polyesteracrylates, polyetheracrylates and polyurethaneacrylates, epoxyacrylates, aminoacrylates.

Suitable examples for the solvent are water, hydrocarbons, ethers, alcohols, esters, ketones and mixtures thereof.

The pigment is preferably selected from the group consisting of organic and inorganic pigments, more preferably from azopigments, phthalocyanines, carbon black, titanium dioxides and mixtures thereof.

Preferred examples for fillers are those being selected from the group consisting of silicates, silicon dioxide, talcum, aluminum oxide, aluminum hydroxide, calcium and/or barium carbonates and calcium and/or barium sulfates and mixtures thereof.

Suitable additives are those being selected from the group consisting of stabilizers, leveling agents, wetting agents, adhesion promoters, flow additives, defoamers and mixtures thereof.

Suitable Photoinitiators and co-initiators are compounds selected from the group of benzophenones, thioxanthones, xanthones and anthraquinones, ketocoumarins, carbazoles, $\alpha$-hydroxy ketones, $\alpha$-aminoketones, benzoin ethers, benzil ketals, $\alpha,\beta$ ketoesters, camphorquinones, dimethylketals, acylphosphine oxides, tertiary amines, or more specifically aromatic tertiary amines, such as dimethylamino benzoates and mixtures thereof.

According to still a further aspect, the present invention is related to a coating composition, which comprises:

- 1 to 50% by weight of the aforementioned polymer,
- 10 to 80% by weight of binder,
- 0 to 40% by weight of solvent,

- 0 to 30% by weight of pigment and filler,
- 0 to 10% by weight of one or more additives and
- 0 to 10% by weight of one or more photoinitiators and/or co-initiators.

It is preferred that the coating composition contains at least one diacrylate compound, such as dipropyleneglycole diacrylate (DPGDA), tripropyleneglycole diacrylate (TPGDA) and 1,6-hexanediol diacrylate (HDDA).

The binder is preferably selected from the group consisting of (meth)acrylate monomers, oligomers and mixtures thereof. Suitable examples therefore are polyesteracrylates, polyetheracrylates, epoxyacrylates, aminoacrylates and polyurethaneacrylates.

Suitable examples for the solvent are water, hydrocarbons, ethers, alcohols, esters, ketones and mixtures thereof.

The pigment is preferably selected from inorganic and organic pigments, more preferably selected from the group consisting of azopigments, phthalocyanines, carbon black, titanium dioxides and mixtures thereof.

Preferred examples for fillers are those being selected from the group consisting of silicates, silicon dioxide, talcum, aluminumoxide, aluminumhydroxid and calcium and/or barium sulfates and mixtures thereof.

Suitable additives are those being selected from the group consisting of stabilizers, leveling agents, wetting agents, adhesion promoters, flow additives, defoamers, and mixtures thereof.

Suitable Photoinitiators and co-initiators are compounds selected from the group of benzophenones, thioxanthones, xanthones and anthraquinones, ketocoumarins, carbazoles, $\alpha$-hydroxy ketones, $\alpha$-aminoketones, benzil ketals, benzoin ethers, $\alpha,\beta$ ketoesters, camphorquinones, dimethylketals, acylphosphine oxides, tertiary amines, or more specifically aromatic tertiary amines, such as dimethylamino benzoates and mixtures thereof.

The coating in accordance with the present invention may be used as industrial coatings, such as varnish for instance on a metal surface and/or on a plastic substrate. For instance, the coating may be used as inner and/or outer pipe coating, as automotive coating or as coating applied to machines for agriculture, construction and earth moving, for instance UV curing varnish for corrosion protection. Other examples are coil coatings, wall coatings, floor coatings, inks and the like. The coatings may be applied onto the substrate as liquid or solid and are then typically dried, hardened or cured, respectively, either by physical drying upon water or solvent evaporation, or by a chemical reaction, such as cross-linking or the like, or a combination of physical drying and a chemical reaction.

Subsequently, the present invention is described by means of illustrating, but not limiting examples.

List of used Chemicals

| **Name** | **Description** | **Supplier** |
|---|---|---|
| Rosin acid | Brazilian gum rosin<br>CAS: 8050-09-7 | Sigma-Aldrich Chemicals Pvt Ltd, Bangalore, India |
| MeHQ | Hydroquinone monomethylether<br>CAS: 150-76-5 | Sigma-Aldrich Chemicals Pvt. Ltd, Bangalore, India |
| Phenothiazine | Phenothiazine<br>CAS: 92-84-2 | Sigma-Aldrich Chemicals Pvt. Ltd, Bangalore, India |
| GPTA | SR 9020 (propoxylated(3)glycerin triacrylate)<br>CAS: 52408-84-1 | Sartomer, Exton, United States of America |
| Pentaerythritol | Pentaerythritol<br>CAS: 115-77-5 | Perstorp AB, Malmö, Sweden |
| PTSA | Para-toluene-sulfonic-acid monohydrate<br>CAS: 6192-52-5 | Sigma-Aldrich Chemicals Pvt. Ltd, Bangalore, India |
| CMTX | 2-carboxymethoxythioxanthone<br>CAS: 84434-05-9 | Synthesized from Dithio-bisbenzoic acid following the procedure described in EP 1380580 A1 |
| TBBA | Para-tertiary-butyl-benzoic-acid<br>CAS: 98-73-7 | Sigma-Aldrich Chemicals Pvt. Ltd, Bangalore, India |
| DPGDA | Photomer 4226 (1,2-dipropyleneglycol diacrylate)<br>CAS: 57472-68-1 | IGM resins, Waalwijk, Netherlands |

(continued)

| Name | Description | Supplier |
|---|---|---|
| BHT | Butyl hydroxytoluene<br>CAS: 128-37-0 | Lanxess, Leverkusen, Germany |
| Q-1301 | Ammonium N-nitrosophenylhydroxylamine<br>CAS: 239-341-7 | FUJIFILM Wako Chemicals Europe GmbH, Neuss, Germany |
| CAB | Cellulose acetate butyrate<br>CAB-551-0.01 | Eastman, Kingsport, Tennessee, USA |
| DAP | Daiso DAP A (poly diallylphthalate) | Osaka Soda Co. Ltd., Osaka, Japan |
| HDDA | SR 238 (1,6-hexanediol diacrylate)<br>CAS: 13048-33-4 | Sartomer, Exton, United States of America |
| DETX | 2,4-diethyl-9H-thioxanthen-9-one<br>CAS: 82799-44-8 | IGM resins, Waalwijk, Netherlands |
| 1173 | 2-hydroxy-2-methylpropiophe none<br>CAS: 7473-98-5 | IGM resins, Waalwijk, Netherlands |
| EDB | Ethyl 4-(dimethylamino) benzoate<br>CAS: 10287-53-3 | IGM resins, Waalwijk, Netherlands |

**Example 1**

(*Diels-Alder reaction product of rosin with a polydienophile as intermediate 1*

The reaction was performed in a 3-liter 4-necked flask equipped with a thermometer, water-cooled condenser and mechanical stirrer. The reactor was charged with Brazilian gum rosin (2250.0 g) and heated until the rosin was molten and stirring started at 180°C. The temperature was further increased to 250°C and maintained for 1 hour.

At next, 1.50 g MeHQ, 0.75 g phenothiazine and 750.00 g GPTA were added. The temperature was again increased to 260°C and maintained for 7 hours. After cooling down the reaction mixture to 210°C it was discharged in a metal tray. The resulting product (-> intermediate 1) yielded 2720.0 g, had an acid value of 73.2 mg KOH/g, a softening point of 101 - 104°C and a Mw of 4,400 g/mol and Mn of 600 g/mol.

**Example 2**

*(Preparing rosin modified resin with 5% CMTX - Resin-1)*

The next reaction step was performed in a 2 L 4-necked flask equipped with a thermometer, a water-cooled condenser and a mechanical stirrer. The reactor was charged with 900.0 g of the reaction product from example 1 (intermediate 1), 60.0 g CMTX, 120.0 g TBBA, 120.0 g pentaerythritol and 1.2 g PTSA as catalyst. The CMTX was synthesized according to Example 1 of EP 1380580 A1 (Dithiobisbenzoic acid route). Afterwards, the reaction mixture was heated and stirring started at 160°C, wherein the temperature was increased to 240°C and maintained at 240°C for 1 hour.

In the next step, the temperature was increased to 270°C and the reaction was monitored by determining the acid value every hour until the acid value was below 15.0 mg KOH/g. Afterwards, vacuum was applied at 730 mm Hg for 20 to 25 minutes at 270°C to evaporate volatile components that may be either residual monomers or impurities originating from the rosin which was used. After cooling the reaction mixture to 220°C, the liquid product was discharged in a metal tray. The resulting product (Resin-1) yielded 1085.0 g, had an acid value of 12.0 mg KOH/g, a softening point of 119 to 122°C, a Mw 14,500 g/mol and a Mn of 1,100 g/mol.

**Example 3**

*(Preparing rosin modified resin with 10% CMTX - Resin-2)*

For the reaction of example 3 the same reactor and the same reaction conditions have been used as described

above for example 2. 2900.0 g of the reaction product from example 1, 120 g CMTX, 60.0 g TBBA, 120.0 pentaerythritol and 1.2 g PTSA have been reacted. The resulting product (Resin-2) yielded 1079.0 g, had an acid value of 11.2 mg KOH/g, a softening point of 122 to 125°C, a Mw 26,400 g/mol and a Mn of 1,100 g/mol.

**Example 4**

*(Preparing rosin modified resin with 15% CMTX - Resin-3)*

For the reaction of example 4 the same reactor and the same reaction conditions have been used as described above for example 2. 180 g CMTX, 120.0 pentaerythritol and 1.2 g PTSA have been reacted applying the same process conditions as described in example 2.

The resulting product (Resin-3) yielded 1079.0 g, had an acid value of 12.8 mg KOH/g, a softening point of 122 to 125°C, a Mw 26,800 g/mol and a Mn of 1,100 g/mol.

**Example 5**

*(Varnish preparation and determination of their viscosity)*

Resin-1, Resin-2 and Resin-3 have been used to prepare UV curable varnish 1, UV curable varnish 2, and UV curable varnish 3. 50.00 g of the respective resin have been dissolved at 120°C for 30 minutes in 49.80 g of DPGDA, 0.01 g BHT, g Q-1301 and 0.10 g MeHQ. The viscosity of each such prepared varnish has been tested using a Physica rheometer from Anton Paar. The viscosity was determined at 20°C with a shear rate of 50 radian/seconds.

The results are shown in Table 1 and display the resulting viscosity of the varnish.

**Table 1:** Viscosities of the varnishes 1 to 3

| | **Varnish 1** | **Varnish 2** | **Varnish 3** |
|---|---|---|---|
| **Including** | Resin-1 | Resin-2 | Resin-3 |
| **Viscosity [Pa·s]** | 14 | 21 | 55 |

**Example 6**

*(Varnish preparation and determination of shrinkage upon curing)*

The shrinkage of the Resin-2 prepared in example 3 has been tested in a UV curing formulation. For this purpose, a coating including Resin-2 has been prepared as well as two comparative coatings including CAB and DAP. Each of the coatings has been prepared by dissolving the resins (Resin-2, CAB and DAP) at 120°C for 30 minutes in a mixture of DPGDA, Q-1301 and BHT. Afterwards, HDDA, the photoinitiator DETX, the photoinitiator 1173 and the co-initiator EDB were added as shown in below Table 2. The formulation was afterwards stirred for 2 hours at 50°C until the photoinitiator was completely dissolved in the coating formulation.

**Table 2:** Recipe of the aforementioned UV coatings

| | **Comparative example 1** | **Comparative example 2** | **Example 6** |
|---|---|---|---|
| **Including** | CAB | DAP | Resin-2 |
| **Resin [g]** | 30.00 | 30.00 | 33.00 |
| **DPGDA [g]** | 29.82 | 29.82 | 29.82 |
| **HDDA [g]** | 34.00 | 34.00 | 34.00 |
| **Q-1301 [g]** | 0.06 | 0.06 | 0.06 |
| **BHT [g]** | 0.12 | 0.12 | 0.12 |
| **DETX [g]** | 3.00 | 3.00 | 0.00 |
| **EBD [g]** | 2.00 | 2.00 | 2.00 |
| **1173 [g]** | 1.00 | 1.00 | 1.00 |

(continued)

| | Comparative example 1 | Comparative example 2 | Example 6 |
|---|---|---|---|
| | 100.00 | 100.00 | 100.00 |

Afterwards, the coatings have been applied to the BOPP surface of EWR57 films (from Jindal Poly Films, New Delhi, India) using a K-bar (from Erichsen GmbH & Co. KG, Hemer, Germany) with a film thickness of 12 μm and 24 μm, respectively. The sample size was 13 x 20 cm. Afterwards, the coated layers have been cured using a UV curing system from AMS "Superproofer" equipped with a medium pressure mercury lamp from Baldwin (Serial Nr. 7804853) and applying a power of 240 W/cm. The distance between the lamp and the substrate was set to 45 mm. The lamp was used at 100% power and the speed of the belt was set to 20 m/min resulting in a UV dosage of 660 +/-20 $mJ/cm^2$.

In the figures:

Fig. 1 shows a sketch of the cross cut method. The projections of the edges A-D that bend upwards on the plane that shows out of the plane are displayed on the left hand side and the bottom of the figure. The figure is adapted from DIN norm 55403 (2014)

Fig. 2 shows photographs of the cross cut method applied to EWR 57 films coated with a 24μm thick layer of a coating formulations containing Comparative example 1, comparative example 2 and example 6 and cured under UV light.

The DIN norm 55403 describes a test to evaluate the tendency of plastic films or film composites to coil. When applied on plastic films, the shrinkage of the UV coating during the curing reaction causes an internal stress in the coating that leads to a coiling of the coated plastic film. A method was developed to determine the tendency of the sample to coil in analogy to the cross-cut method described in the DIN norm 55403, 2014. Therefore the edges of the coated plastic film have been fixed on a card board and a cross is cut into the sample subsequently after the curing step. As a result of the internal stress the edges of the cross-cut bend upwards or even start to coil. Figure 1 shows a sketch of the cross-cut method applied to a coated plastic film. The projection of the upwards bending edges looking from the side on the sample is displayed on the lefthand side and on the buttom of the figure. The respective Edges A-D are marked in the projection and on the sketch. The distance between the four Edges A-D and the table was measured with help of a ruler and indicated in small letters a-d. For a good comparison of the samples the values a-d (unit was mm) were added to give the value L. The measured distances a-d decrease with time due to a relaxation of the internal stress in the coating. For that reason the distances were measured within 5 to 10 minutes after the curing reaction. For a better comparability each experiment was repeated three times. The relative error of the three repetitions was around 20% or lower. It is important that all coatings were fully cured and their surface was tack-free.

The results for L are summarized in Table 3 and Figure 2 shows photographs of the samples 30 minutes after the curing reaction.

**Table 3:** Results employing the cross cut method to plastic films coated with coatings of comparative example 1, comparative example 2 and example 6 and two different film thicknesses of the coated layer.

| | | Comparative example 1 | Comparative example 2 | Example 6 |
|---|---|---|---|---|
| **Including** | | CAB | DAP | Resin 2 |
| **Film thickness 12 μm** | | | | |
| L[1] [mm] | #1 | 85 | 54 | 6 |
| L[1] [mm] | #2 | 60 | 85 | 8 |
| L[1] [mm] | #3 | 57 | 55 | 6 |
| Mean value [mm] | | 67 | 65 | 7 |
| Rel. Error | | 19% | 22% | 14% |
| **Film thickness 24 μm** | | | | |
| L[1] [mm] | #1 | 160 | 130 | 24 |
| L[1][mm] | #2 | 155 | 102 | 37 |

(continued)

| Film thickness 24 µm | | | | |
|---|---|---|---|---|
| L[1] [mm] | #3 | 140 | 145 | 38 |
| Mean value [mm] | | 152 | 126 | 33 |
| Rel. Error | | 6% | 14% | 19% |
| | | | | |
| [1] L = a+b+c+d | | | | |

Figure 1 and Table 3 demonstrate that for the coating formulated with Resin-2 (example 6) the curling of the edges is close to very low in comparison with the coatings formulated with CAB or DAP. It could be demonstrated that the internal stress and shrinkage in the UV cured coating layer could be significantly reduced using Resin-2 in comparison with a CAB and a DAP resin.

## Claims

**1.** A polymer being obtainable by a method comprising the reaction of:

a) at least one rosin acid containing at least two conjugated carbon-carbon double bonds,
b) at least one polydienophile compound comprising two or more carbon-carbon double bonds,
c) at least one compound selected from the group consisting of polyhydroxyl compounds $c_1$), polyepoxy compounds $c_2$), polyamine compounds $c_3$), polythiol compounds $c_4$) and arbitrary combinations of two or more of the aforementioned compounds and
d) at least one photoinitiator $d_1$) and/or at least one co-initiator $d_2$), wherein the at least one photoinitiator $d_1$) and/or the at least one co-initiator $d_2$) comprises at least one functional group being selected from the group of ester groups, carboxylic acid groups, carboxylic acid chloride groups, carboxylic acid anhydride groups, hydroxyl groups, thiol groups, primary amine groups, halogen groups, epoxy groups, isocyanate groups, isothiocyanate groups and arbitrary combinations of two or more of the aforementioned groups.

**2.** The polymer in accordance with claim 1, wherein the polymer does not contain any terminal carbon-carbon double bond.

**3.** The polymer in accordance with claim 1 or 2, wherein in the method also at least one carboxylic acid or carboxylic acid derivative e) comprising one or more carboxylic acid groups, carboxylic acid chloride groups or carboxylic acid anhydride groups is reacted with components a) to d).

**4.** The polymer in accordance with any of the preceding claims, wherein the at least one rosin acid a) is selected from the group consisting of pimaric acid, neoabietic acid, palustric acid, abietic acid, levopimaric acid and arbitrary combinations of two or more of the aforementioned carboxylic acids.

**5.** The polymer in accordance with any of the preceding claims, wherein the at least one polydienophile compound b) comprising two or more double bonds is a compound according to the following general formula (1):

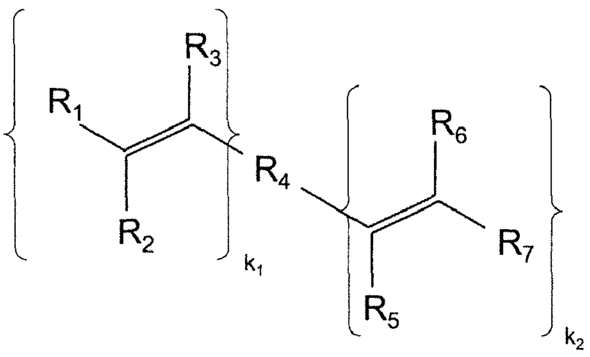

(1)

wherein

$R_1$ to $R_3$ and Rs to $R_7$ are independently from each other selected from the group consisting of hydrogen, alkyl groups, substituted alkyl groups, aromatic groups, substituted aromatic groups, heterocyclic groups, substituted heterocyclic groups, cycloaliphatic groups and substituted cycloaliphatic groups, wherein the substituted group may be substituted with one or more ether groups, one or more ester groups, one or more carboxylic groups, expoxy groups, one or more amide groups, or the like, with $R_1$ or $R_2$ being optionally a bond with $R_3$ and/or $R_6$ or with $R_7$ being optionally a bond with R5,

$R_4$ is an alkyl group or a substituted alkyl group, wherein the substituted alkyl group may be substituted with one or more ether groups, one or more ester groups, one or more carboxylic groups, one or more hydroxyl groups, one or more epoxy groups, one or more amide groups, one or more urethane groups, one or more thiol groups, one or more acid chloride groups, one or more keto or aldehyde groups, and

ki and $k_2$ are independently from each other an integer of 0 to 20 and preferably of 2 to 20.

**6.** The polymer in accordance with any of the preceding claims, wherein the at least one polydienophile compound b) comprising two or more double bonds is selected from the group of diacrylate compounds, triacrylate compounds, tetraacrylate compounds, penta- or higher functional acrylate compounds, dimethacrylate compounds, trimethacrylate compounds, tetramethacrylate compounds, penta- or higher functional methacrylate compounds, itaconic compounds, and arbitrary combinations of two or more of the aforementioned compounds, wherein the polydienophile compound b) preferably has a weight average molecular weight $M_w$ determined by gel permeation chromatography of 200 to 5,000 g/mol.

**7.** The polymer in accordance with any of the preceding claims, wherein the at least one polyhydroxyl compound $c_1$) is a monomeric polyol with two or more hydroxyl groups, a linear polyetherpolyol with two or more hydroxyl groups, a branched polyetherpolyol with two or more hydroxyl groups, a sugar alcohol with three or more hydroxyl groups or a triglyceride with two or three secondary hydroxyl groups, and preferably a compound being selected from the group consisting of 1,2,4-butanetriol, 1,2,6-hexanetriol, 3-methyl-pentane-1,3,5-triol, diglycerin, dipentaerythritol, di-trimethylol propane, erythritol, fucitol, galactitol, glycerin, hydroxymethyl hexanediol, iditol, inositol, lactitol, maltitol, maltotetraitol, maltotriitol, mannitol, pentaerythritol, polyglycitol, ribitol, threitol, arabitol, trimethylol butane, trimethylol ethane, trimethylol hexane, trimethylol octane, trimethylol propane, tripentaerythritol, volemitol, tris (2-hydroxyethyl)isocyanurate, neopentyl glycol, ethylene glycol, diethylene glycol, propylene glycol, methylpropanediol, polyether polyols, ethoxylated or propoxylated branched polyols, sorbitol, xylitol, isosorbide and arbitrary combinations of two or more of the aforementioned polyhydroxyl compounds.

**8.** The polymer in accordance with any of the preceding claims, wherein the at least one polyepoxy compound $c_2$) comprises at least two epoxy groups and is selected from the group consisting of polyglycidylethers, bisphenol A diglycidylether, bisphenol F diglycidylether, ethoxylated/propoxylated bisphenol A diglycidylether, ethoxylated/propoxylated bisphenol F diglycidylether, 3,4-epoxycyclohexylmethyl-3',4'-epoxy-cyclohexane carboxylate, epoxyphenol novolacs, 1,4-butanediol diglycidylether, neopentylglycol diglycidylether, 1,6-hexandiol diglycidylether, polyoxypropylenglycol diglycidylethers, trimethylolpropane triglycidylether, poly(tetramethylene oxide) diglycidylethers, polyglycerol-3-polyglycidylethers, glycerin triglycidylether, pentaerythrol polyglycidylether, polyglycidylether of ethoxylated trimethylolpropane, polyglycidylether of propoxylated glycerin, hydrated bisphenol A-diglycidylether, hydrated bisphenol F-diglycidylether, triglycidyl isocyanurate, novolac resins and arbitrary combinations of two or

more of the aforementioned polyepoxy compounds.

**9.** The polymer in accordance with any of the preceding claims, wherein the at least one polyamine compound $c_3$) comprises at least two amino groups and is selected from the group consisting of polyamines, alkoxylated polyamines, polyether amines, polyester amines, polyamido amines, amine terminated polyurea compoundsand arbitrary combinations of two or more of the aforementioned compounds, and is preferably selected from the group consisting of polypropylene glycol diamines, polyethylene glycol diamines, alkoxylated glycerol triamines, diethylene triamine, tetraethylene diamine, polytetramethylene glycol diamines, primary amines based on polyoxyalkyl polyamine with a weight average molecular weight preferably of 200 to 5,000 g/mol, N,N,N,N'-tetraglycidyldiamino-4,4'-diphenylmethane, isophorone diamine, cyanoethylated trimethyl-hexamethylenediamine, diaminodiphenylmethane and arbitrary combinations of two or more of the aforementioned compounds.

**10.** The polymer in accordance with any of the preceding claims, wherein the at least one polythiol compound $c_4$) comprises at least two thiol groups and is selected from the group consisting of aliphatic polythiols, aromatic polythiols, ester polythiols, mercaptan terminated polymers and arbitrary combinations of two or more of the aforementioned compounds.

**11.** The polymer in accordance with any of the preceding claims, wherein the at least one photoinitiator $d_1$) and/or at least one co-initiator $d_2$) each comprise at least one functional group being selected from the group consisting of ester groups, carboxylic acid groups, carboxylic acid chloride groups, carboxylic acid anhydride groups, hydroxyl groups, thiol groups, primary amino groups, halogen groups, epoxy groups, isocyanate groups, isothiocyanate groups and arbitrary combinations of two or more of the aforementioned functional groups, wherein preferably the at least one photoinitiator $d_1$) and/or at least one co-initiator $d_2$) are selected from the group consisting of benzophenones, thioxanthones and tertiary amino compounds being functionalized with an aforementioned functional group.

**12.** The polymer in accordance with any of the preceding claims, wherein the at least one carboxylic acid or derivative comprising one or more carboxylic acid groups, carboxylic acid chloride groups or carboxylic acid anhydride groups e) is selected from the group consisting of 2-ethyl hexanoic acid, oleic acid, benzoic acid, tert-butyl benzoic acid, $C_{1-20}$-monocarboxylic acids, 2,4,6-trimethylbenzoic acid, adipic acid, succinic acid, sebacic acid, $C_{1-20}$-dicarboxylic acids, maleic acid, fumaric acid, phthalic acid, isophthalic acid, terephthalic acid, trimelithic acid, itaconic acid, glutaconic acid, traumatic acid, muconic acid, glutinic acid, citraconic acid, mesaconic acid and arbitrary combinations of two or more of the aforementioned compounds.

**13.** The polymer in accordance with any of the preceding claims, which fulfils one or more of the subsequent criteria:

i) having a weight average molecular weight Mw measured by gel permeation chromatography of 600 to 50,000 g/mol, preferably of 1,000 to 50,000 g/mol and more preferably of 4,000 to 30,000 g/mol,
ii) having a number average molecular weight $M_n$ measured by gel permeation chromatography of 100 to 30,000 g/mol, preferably of 500 to 20,000 g/mol and more preferably of 700 to 10,000 g/mol,
iii) having an acid number of 0 to 80 mg KOH/g, preferably of 0 to 50 mg KOH/g and more preferably of 1 to 20 mg KOH/g,
iv) having a softening point of 40 to 200°C, preferably of 70 to 160°C and more preferably of 80 to 150°C,
v) having a viscosity when diluted in 50% dipropylene glycol diacrylate (DPGDA) of 1 to 300 Pa·s, preferably of 1 to 200 Pa·s and more preferably of 10 to 100 Pa·s, measured with a cone-plate geometry, the cone having a diameter of 25 mm and an angle of 1°, the gap of the cone and the plate being 0.05 mm, at 20°C temperature and at a deformation rate of 50 radian/s.

**14.** A method for producing a polymer in accordance with any of the preceding claims, comprising reacting in one or more steps:

a) at least one rosin acid containing at least two conjugated double bonds,
b) at least one polydienophile compound comprising two or more double bonds,
c) at least one compound selected from the group consisting of polyhydroxyl compounds $c_1$), polyepoxy compounds $c_2$), polyamine compounds $c_3$), polythiol compounds $c_4$) and arbitrary combinations of two or more of the aforementioned compounds and
d) at least one photoinitiator $d_1$) and/or at least one co-initiator $d_2$), wherein the at least one photoinitiator $d_1$) and/or the at least one co-initiator $d_2$) comprises at least one functional group being selected from the group of

ester groups, carboxylic acidgroups, carboxylic acid chloride groups, carboxylic acid anhydride groups, hydroxyl groups, thiol groups, primary amine groups, halogen groups, epoxy groups, isocyanate groups, isothiocyanate groups and arbitrary combinations of two or more of the aforementioned compounds.

**15.** A coating comprising:

- 1 to 50% by weight of the polymer in accordance with any of claims 1 to 13,
- 10 to 60% by weight of binder,
- 0 to 40% by weight of solvent,
- 0 to 40% by weight of pigment,
- 0 to 20% by weight of one or more fillers,
- 0 to 10% by weight of one or more additives and
- 0 to 10% by weight of one or more photoinitiators and/or co-initiators.

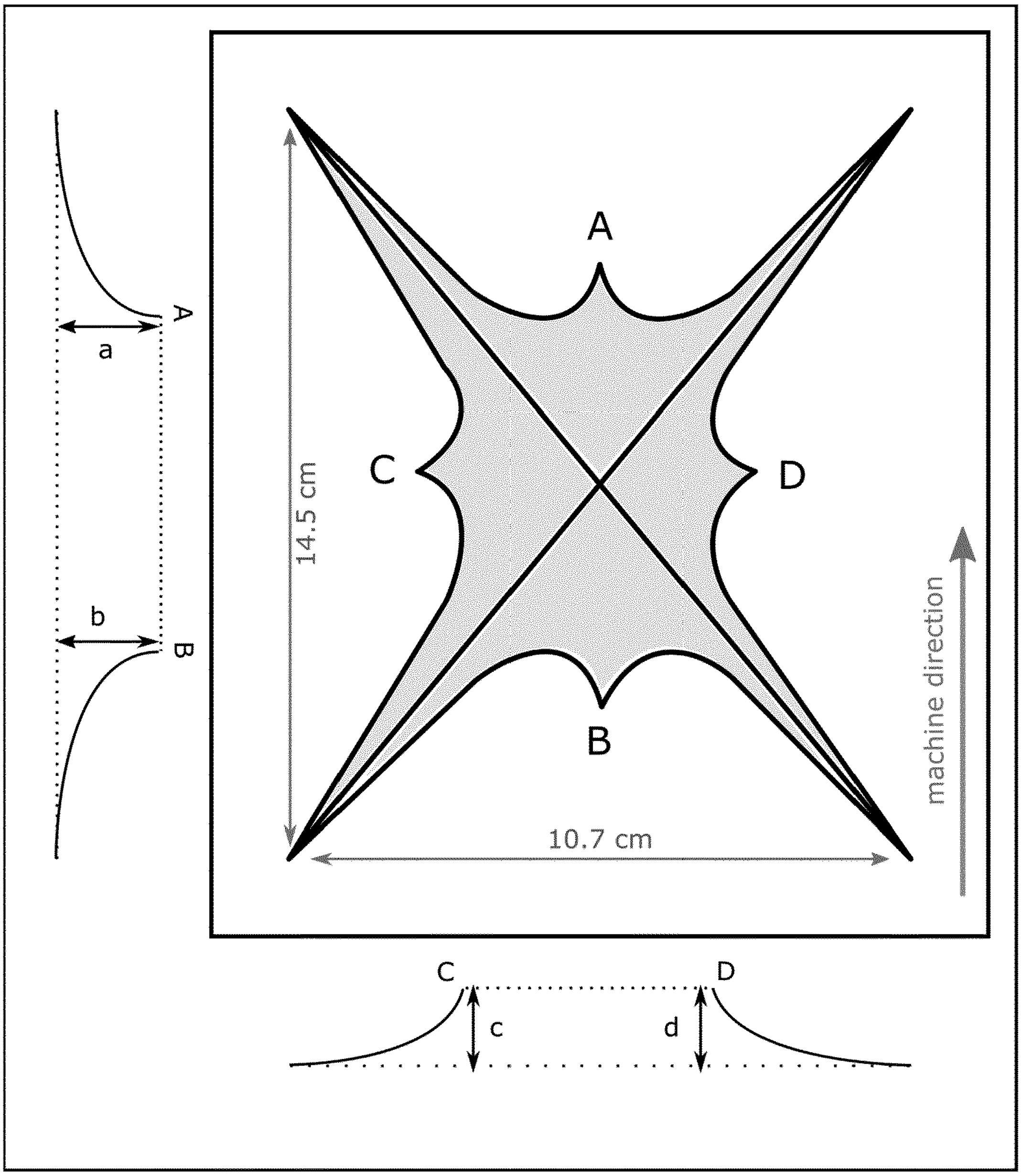


**Fig. 1**

Fig. 2

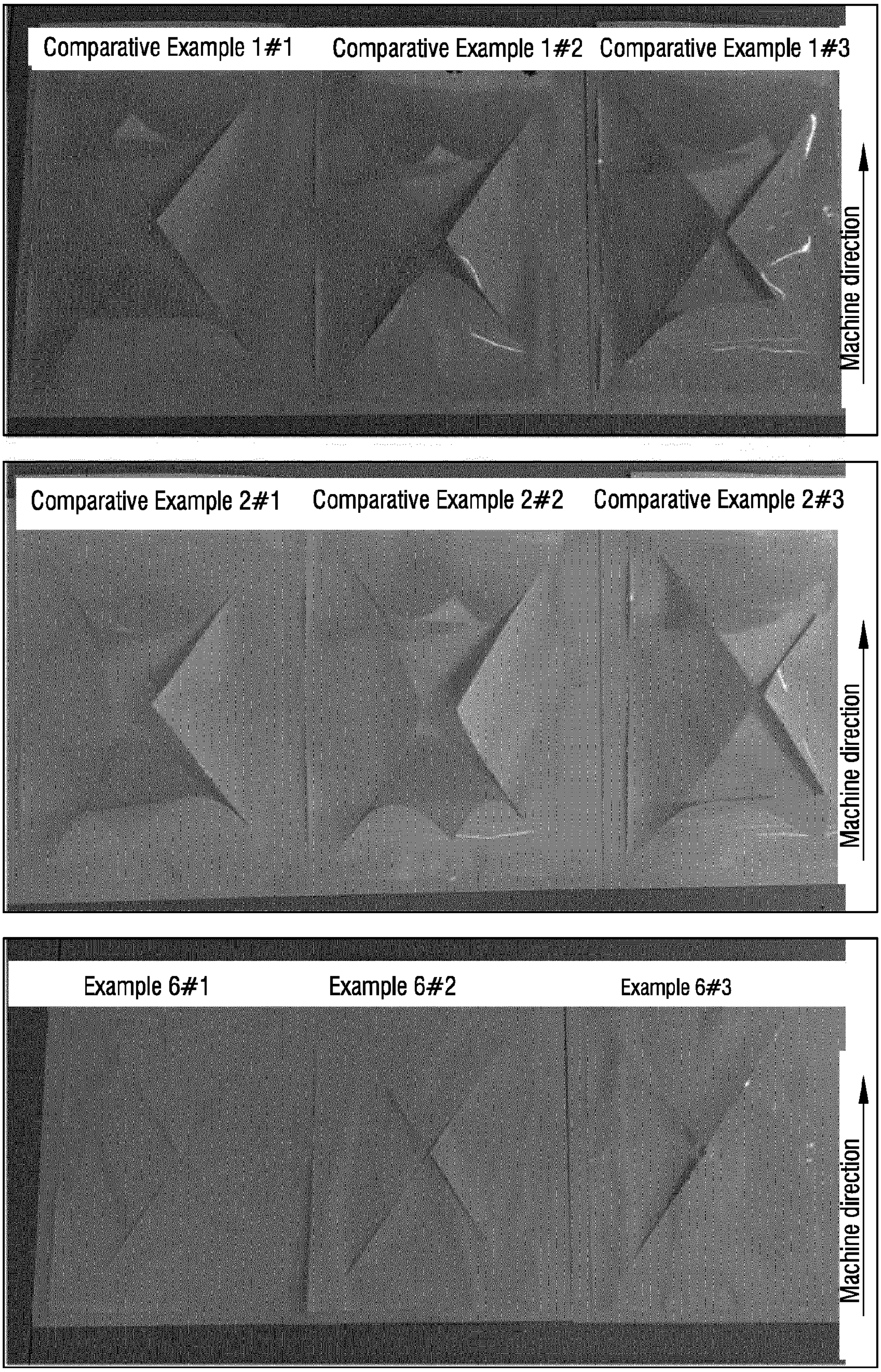
Comparative Example 1#1
Comparative Example 1#2
Comparative Example 1#3
Machine direction
Comparative Example 2#1
Comparative Example 2#2
Comparative Example 2#3
Machine direction
Example 6#1
Example 6#2
Example 6#3
Machine direction

Europäisches Patentamt
European Patent Office
Office européen des brevets

# EUROPEAN SEARCH REPORT

Application Number
EP 22 15 2246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 022 317 A1 (BAYER AG [DE]) 26 July 2000 (2000-07-26) * paragraph [0001] - paragraph [0004] * * paragraph [0006] - paragraph [0013] * * paragraph [0019]; example 2 * * paragraph [0026]; example 6 * * claims 1-4 * ----- | 1-15 | INV. C09D4/00 C09D11/101 C08L93/04 C09D193/04 |
| A | WO 2019/160833 A2 (SUN CHEMICAL CORP [US]) 22 August 2019 (2019-08-22) * paragraph [0005] - paragraph [0008] * * paragraph [0028] - paragraph [0030] * ----- | 1-15 | |
| A | WO 2011/107521 A2 (FIBAC APS [DK]; ENPRO APS [DK]; TOFTE JESPERSEN HENRIK [DK]) 9 September 2011 (2011-09-09) * page 1, line 4 - line 6 * * page 3, line 8 - page 4, line 16 * * figures 2,3 * ----- | 1-15 | |
| A | CN 108 329 733 A (KUNSHAN FAVORSTAR ELECTRONICS CO LTD) 27 July 2018 (2018-07-27) * paragraph [0002] * * claims 1, 3 * ----- | 1-15 | TECHNICAL FIELDS SEARCHED (IPC) C09D C09J C08L |
| A | CN 1 887 928 A (SHANXI PROV INST OF APPLIED CH [CN]) 3 January 2007 (2007-01-03) * page 3, line 1 - line 3 * * page 6; table 1 * * page 7, line 19 - page 9, line 19 * * claims 1-9 * ----- -/-- | 1-15 | |

The present search report has been drawn up for all claims

1

| Place of search | Date of completion of the search | Examiner |
|---|---|---|
| Munich | 26 July 2022 | Siemsen, Beatrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 15 2246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LU YANJU ET AL: "Synthesis of allyl acrylpimarate by microwave irradiation and phase-transfer catalytic reaction and its UV-curing reactions as a new monomer", PROCESS IN ORGANIC COATINGS, ELSEVIER BV, NL, vol. 109, 25 April 2017 (2017-04-25), pages 9-21, XP085043630, ISSN: 0300-9440, DOI: 10.1016/J.PORGCOAT.2017.04.006 * abstract * * figures 1, 2 * ----- | 1-15 | |
| | | | TECHNICAL FIELDS SEARCHED (IPC) |

The present search report has been drawn up for all claims

1

| Place of search | Date of completion of the search | Examiner |
|---|---|---|
| Munich | 26 July 2022 | Siemsen, Beatrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 22 15 2246

This annex lists the patent family members relating to the patent documents cited in the above-mentioned European search report. The members are as contained in the European Patent Office EDP file on
The European Patent Office is in no way liable for these particulars which are merely given for the purpose of information.

26-07-2022

| Patent document cited in search report | Publication date | Patent family member(s) | Publication date |
| --- | --- | --- | --- |
| EP 1022317 A1 | 26-07-2000 | AT 252142 T | 15-11-2003 |
| | | DE 19902403 A1 | 03-08-2000 |
| | | DK 1022317 T3 | 16-02-2004 |
| | | EP 1022317 A1 | 26-07-2000 |
| | | ES 2208153 T3 | 16-06-2004 |
| | | JP 2000226407 A | 15-08-2000 |
| | | PT 1022317 E | 27-02-2004 |
| | | US 6323254 B1 | 27-11-2001 |
| WO 2019160833 A2 | 22-08-2019 | EP 3752369 A2 | 23-12-2020 |
| | | US 2020369065 A1 | 26-11-2020 |
| | | WO 2019160833 A2 | 22-08-2019 |
| WO 2011107521 A2 | 09-09-2011 | CN 103189454 A | 03-07-2013 |
| | | DK 2542629 T3 | 08-02-2021 |
| | | EP 2542629 A2 | 09-01-2013 |
| | | ES 2853073 T3 | 14-09-2021 |
| | | JP 5739459 B2 | 24-06-2015 |
| | | JP 2013521365 A | 10-06-2013 |
| | | KR 20140022714 A | 25-02-2014 |
| | | PL 2542629 T3 | 12-07-2021 |
| | | PT 2542629 T | 03-03-2021 |
| | | US 2013209389 A1 | 15-08-2013 |
| | | WO 2011107521 A2 | 09-09-2011 |
| CN 108329733 A | 27-07-2018 | NONE | |
| CN 1887928 A | 03-01-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1380580 A1


### Non-patent literature cited in the description


- *CHEMICAL ABSTRACTS,* 8050-09-7
- *CHEMICAL ABSTRACTS,* 150-76-5
- *CHEMICAL ABSTRACTS,* 92-84-2
- *CHEMICAL ABSTRACTS,* 52408-84-1
- *CHEMICAL ABSTRACTS,* 115-77-5
- *CHEMICAL ABSTRACTS,* 6192-52-5
- *CHEMICAL ABSTRACTS,* 84434-05-9
- *CHEMICAL ABSTRACTS,* 98-73-7
- *CHEMICAL ABSTRACTS,* 57472-68-1
- *CHEMICAL ABSTRACTS,* 128-37-0
- *CHEMICAL ABSTRACTS,* 239-341-7
- *CHEMICAL ABSTRACTS,* 13048-33-4
- *CHEMICAL ABSTRACTS,* 82799-44-8
- *CHEMICAL ABSTRACTS,* 7473-98-5
- *CHEMICAL ABSTRACTS,* 10287-53-3